# EUROPEAN PATENT APPLICATION

(11) **EP 2 082 915 A1**
(43) Date of publication of application: **29.07.2009**
(21) Application number: 07816601.4
(22) Date of filing: 18.10.2007
(51) Int. Cl.: B60K 17/344, F16H 3/62

(54) **A MULTISTAGE DYNAMIC SPEED REGULATOR**

(30) Priority: 18.10.2006 CN 200610113842
(71) Applicant: Hsu, Chihkang, Xindian City, Taipei, Taiwan (CN); Tseng, Shengtsai, Tao Yuan Hsien, Taiwan (CN); Tseng, Huichen, Tao Yuan Hsien, Taiwan (CN); Huang, Weihua, Xindian City, Taipei, Taiwan (CN); Tseng, Weifu, TaoYuan Hsien, Taiwan (CN); Tseng, Yufu, TaoYuan Hsien, Taiwan (CN); Tseng, Kaifu, TaoYuan Hsien, Taiwan (CN)
(72) Inventor: TSENG, Shengtsai, TaoYuan Hsien Taiwan (CN)
(74) Representative: Cardy, Sophie Marie
(86) International application number: PCT/CN2007/002987
(87) International publication number: WO 2008/046316

(57) **Abstract**

A multi-section improved power governor transmission includes a start system (1), an engine assisted braking switching system, a speed switching system, a gear selection system (4), and a speed switching control system. The start system is connected to the gear selection system (4) through the engine assisted brake switching system. The speed switching system is connected to an output shaft through the gear selection system. The speed switching control system, the speed switching system, and the gear selection system are connected to the power output devices and further connected to the parking gears to control speed change, gear change, and the braking. The speed switching and gear switching functions are integrated in one speed control axis to achieve operational efficiency.

## Description

### BACKGROUND OF THE INVENTION

### Field of the Invention

The present invention is directed to a structure improved governor, more particularly, to a multi-section power automatic governor. It improves the structure and the operation of the gear switch, with much improved control and achieving the reduction of the energy consumption.

### Description of Related Art

Conventional automobile transmissions can be manual, automatic, or continuous speed change transmissions. The above existed transmissions have the following shortcomings:

1. Manual transmission relies on the driver's operations on the clutch and gear switches, which depends on the driver's judgment on road conditions and the auto speed. The driver is required to make certain efforts and have experiences to smoothly operate the automobile.

2. In automatic transmission system, the transmission oil is used to transmit the torque. The efficiency of this transmission is not very high, thus, it increase the energy consumption.

3. Continuous speed change transmission requires a set of belt to connect a pair of wheels. The belt may not have the full efficiency of transmitting from one rotating wheel to another due to the spillage, or contraction due to friction which can easily break the belt.

### SUMMARY OF THE INVENTION

The present invention is directed to a governor transmission using electronic programmable logical controller (PLC) through the feedback from the sensors to control the clutch and buffer. The invention provides the optimum transmission settings based on the road condition, carried weight to achieve the reduction of the energy usage.

In order to achieve the above design purpose, following design concepts are adopted. A Multi-Section power governor which includes a start system (SS), a speed switching system (SSS), a gear selection system (GSS), and a speed switching control system (SSCS) is provided. The configuration will be described as follows.

The start system is connected to the power axis. This start system includes an active solar gear which connected to the power transmission device and the satellite gears which connect and deliver power to the passive gear set in the speed switching system. The above mentioned active and passive parts are connected through a power transmission device.

The SS is a satellite gear set buffer system. It includes the solar gear, satellite gear, ring gear and the two satellite gear frames which resides on both sides of the solar gear; one of them is functioning as the satellite gear frame for the active parts and also serves passive parts which neighboring with the output shaft. The other satellite gear frame resides on the other side of the solar gear (11) cylinder. In between this satellite gear frame and the solar gear (11) cylinder resides the driving parts of SMS. In these two satellite frames there is a satellite gear axel; on this axel the gears of the satellite and the main are meshed. Outside of these satellite gears meshed with the ring gears.

The ring gears can be instructed "to rotate" or "not rotate", which can cause the solar gear (11) behaves to the opposite; that is "not rotate" or "to rotate". The device which makes the above mentioned behavior is called Brake Bandage Electrical Motor (BBEM). The BBEM includes one electrical bandage brake and one bandage brake mandrel, and in between the two there is a transmission device, which when the electrical bandage brake starts it will make the mandrel move to either make the electrical bandage brake to hold ring gear tight or loose.

The engine assisted brake switching system (EABSS) includes one engine brake driving ring and two one-way-bearings configured in opposite direction as the switching device. The solid-based driving ring resides on the top of the passive parts of the SS. One one-way bearing is sitting in between the driving ring and the active parts of the SS. when the rotating speed of the driving ring is greater than that of the passive parts, the power from the SS is transmitted to SSS; on the other hand when it is idling there is no power transmitted. Another one-way-bearing is sitting in between the driving ring and the parking ring, when the parking ring rotating speed is greater than the driving ring the power from the parking ring is transmitted to driving ring and further transmit to SS. On the other hand, when it is idling no power is transmitted.

The alternate approach is using electrical control switching device. This includes one ratchet sleeve and one driving device; this ratchet sleeve can move around the solid-based passive parts in SS, the ratchet sleeve is installed in between the active parts of SSS and the parking gear. The two sides of ratchet sleeve equipped with ratchet which can be meshed into either the active part of SSS or the parking gears. The driving device includes one engine braking switching fork which at one end resides on the groove of the ratchet sleeve and the other end is on the solid-based fork axel, it also includes one engine braking switching motor. In between the engine braking switching motor and the engine braking switching fork, there is a transmission device.

Another alternate approach is using the accelerator pedal control switching installment, namely in the previous mentioned electrical control switching device, eliminate the electrical control device, and instead, establishes an engine braking switching anchor rope, in the upper end of the engine braking switching fork providing a handle, which tied to the rope, and on the other side tie to a spring which is attached to the chassis. Connect the anchor rope and the accelerator pedal. When the accelerator pedal does not step on, the engine will be in the braking mode.

The speed switching system includes control active parts of the power input shaft and the various speed passive parts of the power output shaft. These active and passive parts are connected through a speed switching gears. In this speed switching gear it also provides speed change adjuster device.

The SSS configuration structure includes : The speed switching gear sets which contain the meshed output gear set and the input gear set and each separately resides on the output shaft and the input shaft, the output gear and the input gear are one on one meshed, and the row of the meshed gear sets is called speed switching gear set. The active part is the input active gear is meshed with the passive gear which resides in the input shaft. The gear in the input shaft, as the member of the first row speed switching gear will mesh with the first gear in the output gear of the first row of the speed switching gear set. The other input gear will be set in the input shaft. Each of the output gear will be set on the output axel and mesh with the corresponding input gear set to form several rows of speed switching gear sets. The output gear is the passive part in the last row of the speed switching gear sets.

The speed switch adjusting device includes the device which can cause the neighboring input gears on the input axels to synchronize to rotate at the unified speed, or detached to idle. This device is a spring-like structure which connects the neighboring output gears to from a row of the output gears through a series of one-way-bearing. The synchronization is caused by the faster speed output gears to bring up the speed of the relatively slower speed output gears. At the higher speed only the high speed gears rotate, and the lower speed gears will be idle.

The spring-like structure and the input gear structures configuration and integration:

Attach one end of the spring on each of the end of the output gears at the second row to the last row of the speed switching gear sets. And the other end of the springs forms an empty cavity. The cylinder of the prior input gear resides in the cavity which formed by the spring-like device. At the end of the cavity which are formed by the spring-like device is a joint. Corresponding to it, the neighboring input gear at the same end in the side also set a matching joint. Install a driving structure on the input axel which is in between two joints. This driving structure will move to force the spring-like device to compress and which will make the neighboring input gear joint to detach, and the release of the compression pressure will reconnect the joints. The driving device is connected to the control mechanism of the speed switching control system.

The structure of the gear selection system includes control active parts, control passive parts, and gear switching parts. The control passive parts connect to one of the gear set of the gear selection system. The control active parts and the control passive parts are connected through a power transmission device. The gear switch can connect the active part to one of the passive part or select to not to connect to the output shaft. The connections can be a rear wheel, front wheels, or four wheels. It can also transmit a forward, backward, or idle based on the power and rotation speed presented.

The GSS is a bevel gear transmission shifting structure. The active part is an active bevel gear, the passive part is the passive bevel gear, and in between, connecting to a rotatable middle commutating bevel gear which is meshed with the active and passive bevel gears, and fastened on the shell of the main machine. In between the passive bevel gear and the output axel installed a bearing. The commutating part includes one output slippery wrap in both sides, and the active and passive bevel gears correspondingly have the connecting joint. Besides, the output slippery wrap is connected to a dial forks elevating mechanism to connect to the control mechanism in the SSCS.

The speed switching control system includes driver control structure. In this structure it contains a driver motor/manual driver device; further it includes controllers for the gear switching parts of the GSS. The driving control mechanism and previously mentioned active parts and passive parts control mechanisms are connected through the transmitting device.

Control driving device in SSCS includes one driving motor and/or manual driving device. This device passes through a transmission device and connects it to speed switching control shaft. On this speed switching control shaft installs the speed switching adjuster related controller of speed switching device and the control device which related to the gear change parts of the gear selection system.

The control device which related to the speed switching adjuster device in the SSCS is a simple push-pull device.

This simple push-pull device includes control active part that is top bead locating active gear and control passive part that is top bead locating passive gear.

Correspondingly, the driving device includes speed switching control plate and speed switching bracket. On Speed switching control shaft, corresponds to the n-th row of the speed switching gear in the SSS, there are n-1 speed switching control plates and speed switching brackets. And there are also n-1 corresponding push-pull devises.

The speed switching control plate is set on the input shaft, passes through the bearing, and is fastened on to one end of the spring-like device. The speed switching bracket is a plate-like object. There are two holes on this object. Through one hole it attaches the one end of the speed switching bracket to sit on the cylinder of the input gear, which is next to spring-like device. And through the other hole to attach another end of the speed switching bracket on the speed control shaft and making this speed switching bracket set on the input shaft to stop rotating and locate the position.

In the simple push-pull device, the top bead locating active gear is fastened on the speed switching control shaft. The passive part that is the top bead locating passive gear is fastened on the cylinder of the input gear which is located between the speed switching control plate and speed switching bracket and moves the top bead to mesh with the active gear.

In the top bead locating passive gear plate there are bead holes, there is bead in each hole and corresponds to the speed switching plate.

In the speed switching bracket it has a circular arch structure, which includes a control active part; which includes one front fork and one rear fork, and a control passive part; which includes forward and backward control cam disks. Two forks in the active part are located on each side of the output slippery sleeve, and the contact surfaces are relative to the sleeve surface angle.

One balance plate, which is rotatable, is centered on the fastened point on the balance plate axel of the main machine shell. On the balance plate there are long joint holes on each side. Through these holes, the pins will join the middle part of the front fork and the end of the rear fork. On the bottom end of the front fork is an enclosed bracket. One forward-backward cam disk is solid-based on the speed switching control axel and in the enclosed bracket of the front fork to form a cam disk device. This cam device will work through the forward-backward control plate to drive the front fork to move up or down and further to drive the output slippery sleeve to either move right or left to join the active gear or the passive gear in corresponding to the gear setting of forward, backward or idle.

The parking lock device includes one parking cam disk and one parking lock stick. The parking cam disk resides on the speed switching control axel and the parking lock stick can rotate to stop at and attach to the main machine shell. In the stick, there are two linkage forks, one fork touch on the parking cam disk and another fork has the locking in gear. Based on the parking cam disk's rotation it can be in the state which when the lock in gear mesh with the parking gear, it will lock the output shaft, and when detached from the parking gear it will unlock the output shaft.

The automatic control sensor device is configured in the active part of the SS or the neighboring main machines with the placement of sensor-detectors.

In the speed switching control axel of the SSS, the peripheral of the rotating disk placed some sensors, and on the corresponding main machine shell placed some detectors, and to form the sensor-detector device. This sensor-detector device is used to examine the sensor parameters collected and compares it with the preprogrammed settings in the PLC based on the driver's control on the starter's rotating speed, to automatically control the control motor to drive the rotation of the worm, worm gear set, and the speed switching control axel to achieve the automatic switching.

This sensor-detector device is also used to examine the rotating speed of the active parts in SS and compares it with the preprogrammed setting in the PLC, of the starting rotating speed to determine to start or to stop the electrical brake bandage motor and/or corresponding to the engine assisted brake switching device. it becomes an electrical control of the switching device. Furthermore, one can place the sensor-detectors in the passive part of the SSS and on the shell of neighboring main machines, one can electrically control the starting and the stopping of the electrical motor in the control switching device.

Alternatively, in the manual control device, it includes manual shift stick axel, in between the stick axel and the speed switching control axel there places a transmission device and gear shift box.

On the gear shift box, there is a rotatable manual shift stick axel, on this stick axel, there is a manual driving stick which can pass through the pull level hand stick, through the transmission device, one can rotate the speed switching axel.

On the hand stick, it has an elastic locating device, and corresponding to the movement of the hand stick. The locating device, in it has the gear position holes, will locate the sequence of the hand stick movement and the gear hole position to set the corresponding speed switching control axel rotating angles.

An electrical controlled switching device is corresponding to the engine assisted brake switching device.

In addition, this device includes the following sensors: On the pedal and on the driver area there are transmission sensors, and engine brake sensor. Instead of the electrical motor that used in the engine assisted brake switching system, there exists a permanent magnet as a part of the sensors. On the braking pedal that corresponding to full open throttle position, stopping acceleration position, or starting acceleration position, it will produce the state of detachment, or attachment to the ratchet sleeve of the active part of the SSS. Also the position, the setting of the ratchet sleeve, and its position relative to the parking gear will provide information to PLC to determine whether to provide or shut-off the electrical power to the engine assisted braking switch.

In order to allows 6 rows of the speed switching gear sets to have 32 speed switching combinations in the SSS, on speed switching bracket, there are 6 sets of circular arch top bead pull-back groove tracks. Each pull-back groove track is evenly distributed in a circle. In each pull-back groove track, there are 3, 120 degrees cross-sections. On the speed switching bracket it has three concentric circles, and the 3 pull-back groove track of each gear set are on 3 separate circle, thus the track length of the pull-back groove track are differ to produce the 32 speed switching or to handle the additional condition which may require a lower gear that needed.

This invention provides multi-section automatic governor which can, through the electronic control and the sensor signal feedback to PLC, control the automatic clutch and buffer. The optimum transmission settings based on the road condition, carried weight to achieve the reduction of the energy usage.

In GSMS, the part related to the control mechanism includes the active parts controllers and the passive part controllers, The passive part controllers are connected to GSMS, and the active parts controller is connected to the transmitting device.

In above mentioned two control mechanism, the active part controllers are housing in one single speed control axel, and this speed control axel rotates to execute gear switch and the speed change. It has the following two additional characteristics:

1. Parking gear is set in the output shaft.

2. Engine assisted braking switching systems is set in the above mentioned passive parts. At one end it connected to the input drivers in the SSMS and the other end it connected to parking gears. Thus it will produce two states:

Sate 1: When connected to SSMS it will transmit the power from SMS to SSMS, and this is at the engine power input mode.

State 2: connected to the output shaft parking gears, it will be in the engine assisted braking mode.

In order to make the aforementioned and other features and advantages of the present invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention

Figure 1 provides a better example on the complete construction of the transmission in this operation pattern. This engine assisted brake switching system includes two counter one-way bearings.

Figure 2 schematically illustrates the functional configurations of a preferable implementation of Figure 1.

Figure 3 provides a power governor rear wheel drive structure, and a part of the axel in the main view of the axel illustration.

Figures 4 and 4A schematically illustrate the front view and the side view of the power governor start system in Figure 1.

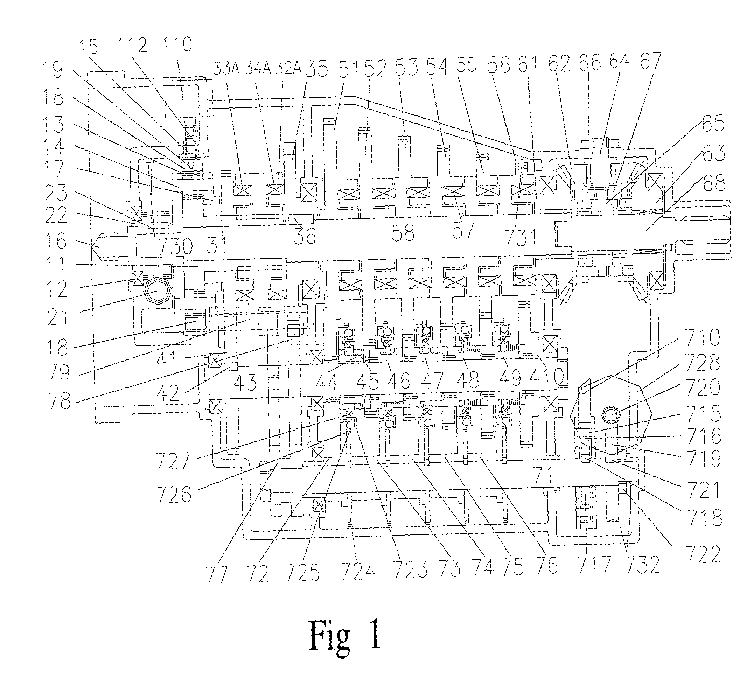

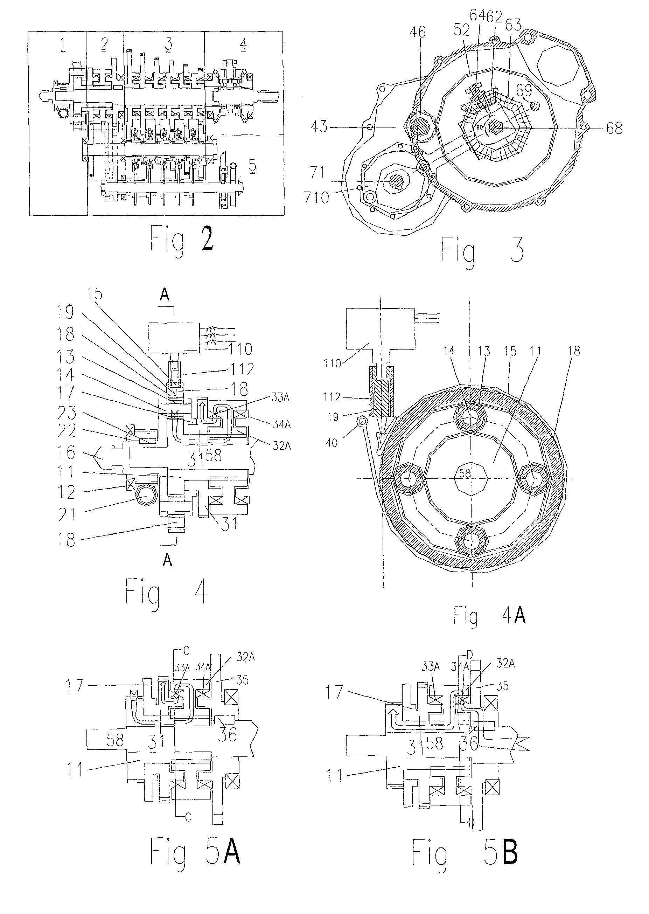

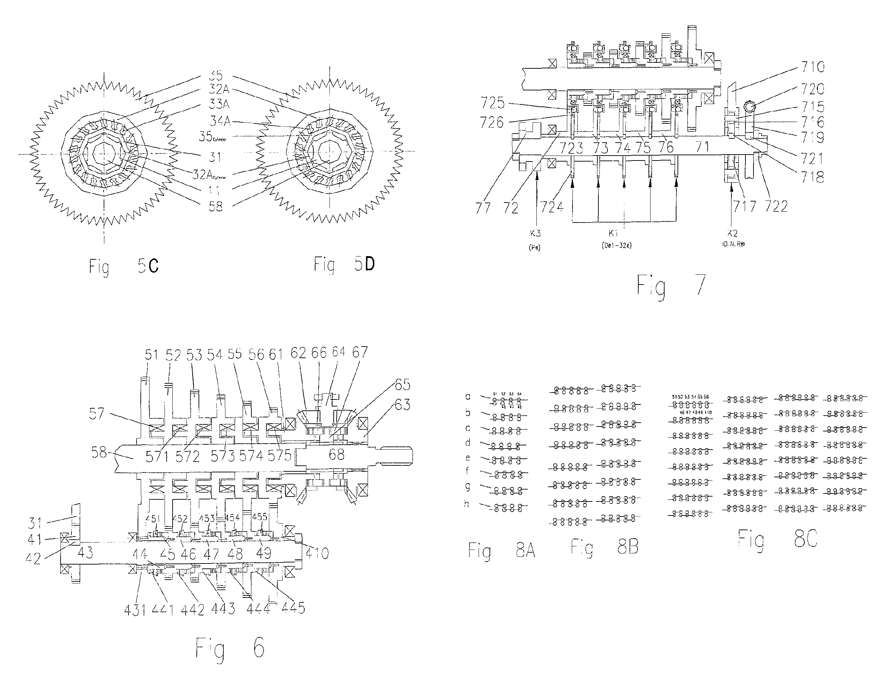

Figures 5A∼5D are schematic views illustrating an assisted braking switching system in the power governor engine of figure 1. Specifically, figure 5A illustrates the structure of the speed switching system transmitting power; figure 5B shows the structure of the auxiliary brake; figure 5C is a C-C cross-sectional view of structure from figure 5A and shows the cross-sectional view structure of the stage when engine is accelerated, wherein the power automatically transmits to the input shaft; figure 5D is a D-D cross-sectional view structure when engine is decelerated, wherein the device automatically reverses output shaft rotation and transmits it to the engine.

Figure 6 shows the gears configuration of speed switching system of the power governor.

Figure 7 shows the structure and control configurations of the intensive speed switching control system in power transmission.

Figure 8A shows 4 pairs of gear sets, and 8 speeds. Details of gear meshing are also shown.

Figure 8B shows 5 pairs of gear sets, 16 speeds. Details of gear meshing are also shown.

Figure 8C illustrates, as shown in figure 1, 6 pairs of gear sets which can be adjusted to 32 speeds. The gear meshing is also shown.

Figure 9A is a structure illustration for gear selection system and shows the movement and transmitting in forward and backward switching system

Figures 9B-9D show gear selection in 3 structure states; specifically, figure 9B shows the position in idle; figure 9C shows in forward motion when the front fork pulling out, rear fork inserted and sliding fork slides to front gear, ratchet gear of output sleeve and ratchet gear of active bevel gear with ratchet gear meshed; figure 9D shows going forward motion, when the gear go backward, front fork inserted and rear fork pulled out then sliding fork slides forward then the ratchet gear of output sleeve meshes with ratchet gear of passive bevel gear. This is an illustration at backward gear.

Figures 10A and 10B are simplified structure illustration of gear selection system of Figure 9.

Figures 11A-11F are structure illustrations of speed switching system in power governor and speed switch adjusting device; specifically, figures 11A and 11B show the structure of the two neighboring input gears in the linked state or separated state; figure 11C shows the bracket control of the distribution angles; figure 11D shows the main view of the structure of bracket; figure 11F shows the main view of structure on top gear beads positioning plate in speed switching control system.

Figure 12 shows implementation example of a system automatic control configurations and illustration, the power governor as shown in Figure-1.

Figure 13 is structure illustration of front wheel drive of power governor.

Figure 14 is structure illustration of power transmission, distribution in four wheel drive of power governor

Figures 15, 15A, and 15B show the structure and control theory on installation of parking lock.

Figure 16 shows the structure and control theory of installation on upward and downward of front folk.

Figure 16A is a aide view of figure 16.

Figure 17A and 17B shows alternative engine brake switch controller in speed switch systems provided by this invention; specifically, figure 17A shows transmitting the power to speed switching system; figure 17B shows the structure of auxiliary engine brake. The idle structure is not shown.

Figure 18 illustrates the sensor structure of engine brake or power transmission sensors on acceleration pedal.

Figure 19 illustrates the structure and configurations of automatic control in power governor.

Figure 20 shows, as shown in figures 17A and 17B, a complete structure of the implementation of electric switch engine braking system.

Figure 21A and 21B provides alternative engine brake switching system illustrations; specifically, figure 21A shows the structure of transmit power by cable in speed switching system; figure 21B shows the structure of auxiliary brake.

Figure 22 shows a complete structure of manual driving device of speed switching system on speed switching control shaft.

Figure 23 shows a structure of manual driven speed switching and gear selection.

Figure 23A is a side view of the structure on figure 23.

### DESCRIPTION OF EMBODIMENTS

As shown in the figures 1 and 2, this invention provides multi-section power automatic governor, which includes: start system (1), engine assisted braking switching system (2),speed switching system (3),gear selection system (4) and speed switching control system (5).

These speed adjusters as mentioned in the previous paragraph is installed on output shaft (58) (which is the same axel as the output shaft (68), not shown in the figure), output shaft (68), input shaft (43) and speed switching control shaft (71), of 4 axis. Among them the output shaft (58), and the output shaft (68) are on the same axel, and meshes with the neighboring shaft end. The output shaft (58) and the output shaft (68) are independently rotate, however through the forward-backward bevel gear set of the gear selection system ( 4 ) to produce the forward, backward and idling functions. Input shaft (43) and the Speed switching control shaft (71), all parallel with the output shaft (68) axel (as shown in the figure 3).

The start system (1) is set on the output shaft (58). The start system (1) includes the active satellite gear frames (16) which connected to the power transmission device and the passive parts of the solar gear (11) which connected to the speed switching system (3) and transmits power into the speed switching system (3). The active satellite gear frame (16) and the passive parts of the solar gear (11) are connected through a transmission device.

The Speed switching system (SSS) (3) includes the active parts of the active gear (31) which transmits the input power and the passive parts at various speeds of output gear (56) which transmits the output power. This active gear (31) and the output gear (56) are connected through a speed switching gear set device. This speed switching gear device has the speed switching adjuster device in it.

The Gear selection system (GSS) (4) includes the active parts, active bevel gear (61), passive parts, passive bevel gear (63) and gear switching parts (65). The active bevel gear (61) and the output gear (56) of the speed switching system (3) are connected. The passive bevel gear (63) is set on the output shaft ((68) or (83)). The output sleeve (65) of the gear switching device can connect to either active bevel gear (61) or passive bevel gear (63), or connect to neither and attach to the output shaft ((68) or (83). These actions produce the power and the rotation speeds that needed in the transmission conditions of the rear wheel, front wheel, or four wheels driving, or idling.

The speed switching control system (SSCS) (5) includes control driving devices, in which it includes a driving motor (728), and/or a manual driving device, the control devices that relate to the speed switching adjuster device in SSS (3), and the control devices that relate to the gear switching and the output sleeve (65) of the GSS (4). The control driving devices and the above mentioned control devices are connected through the transmission devices.

In an embodiment of the start system 1, as shown in figures 1, 4, and 4A, the start system 1 contains a satellite gear set buffering device, the passive part of the solar gear (11), satellite gear (13), ring gear (18), and the satellite gear frames (16) which reside on both ends of the solar gear (11). The active parts and the satellite gear frame (17) are formed to be the active part of the left satellite gear frame (16) and put together with the neighboring passive parts of the solar gear (11) on the output shaft (58).

Similarly, the right side satellite gear frame (17) is set on the right side cylinder of the solar gear (11). In between the satellite gear frame (17) and the cylinder of the solar gear (11) resides the active gear (31) of SSS (3).

In between two satellite gear frames (16) and (17), there is a solid-based satellite gear shaft (14). On this shaft installed the satellite gear (13) which meshes with the solar gear (11). In this implementation example, there are four evenly distributed satellite gears (13) surrounding the solar gear (11), and outside of the satellite gears (13) install a meshed ring gear (18).

The left satellite gear frame (16) and the power reception plate of the starter motor (not shown in the figure) are connected to the input power. The oil pump active gear (22) is set on the left satellite gear frame (16) cylinder through the through key (23) and meshed with the passive gear (21) of the oil pump.

In between the main machine shell and the oil pump active gear (22) installs a bearing (12), and use this bearing to divert some power to drive the oiling system of the mechanical movement parts.

One end of the start system (1) is connected to the power source and the other end passes through the engine assisted braking switching system (2) to connect to the speed switching system (SSS) (3). The SSS (3) pass through the gear selection system (GSS) (4) to connect to the output shaft (68). The output shaft (68) further connects to other subsystems such as the differential gear train to connect to either front wheels, rear wheels or four wheels to realize the above mentioned driven mechanism.

The start system (1) also includes a ring gear (18) which is a device to instruct the solar gear (11) to rotate or not rotate based on this ring gear not rotating or rotating. It is a brake bandage driving device, it includes a brake bandage electrical motor (110), and one brake bandage mandrel (brake bandage push-rod) (19), in outer circumference of the ring gear (18), it sets a brake bandage (15), At one end it passes through a fastened pin (40) and attach to a bracket on the shell of the main machine. On the other end, it connects to the brake bandage driving device. In between the brake bandage electrical motor (110) and brake bandage mandrel (19) it has a transmission device which when the brake bandage electrical motor (110) starts, it will also move the brake bandage mandrel (19) and makes the brake bandage (15), which at one end attached to the bracket on the shell of the main machine and the other end attached to the brake bandage mandrel (19), to either tightly embrace the ring gear (18) or loose it. In this example, the transmission device can be a spiral transmission device which can transform the rotating movement into a linear movement. For example, as shown in the figures 4, 4A the brake bandage electrical motor (110) connected to a screw-like brake bandage mandrel (19), the Lo-fit is set through on the sleeve (112) of a fastened frame (112). The brake bandage electrical motor (110) rotate right and the brake bandage mandrel (19) move down, and tighten the brake bandage (15), when rotate left it will loose the brake bandage (15).

When the car is in idling N or parking P the start system (1) is at the idling state, that is when the starter output shaft rotate to move the left satellite gear frame (16), the right satellite wheel frame (17) rotate and brings driving satellite gear (13) and the ring gear (18) to idle spin. At this time, the solar gear (11) is not moved. And when the brake bandage electrical motor (110) start to turn which makes the brake bandage (15) tightly embrace the ring gear (18) and at this moment the solar gear (11) start to rotate.

The speed switching system (3) includes the active gear (31) of the input power and the output gear (56) of the output power at various speed. This active gear (31) and the output gear (56) are connected through a speed switching gear device, and this device equipped with a speed switching and adjuster. It also includes: a parking gear (35) with the through key (36) is fastened on output shaft (58), and an engine assisted braking switching system (2) which is a switching part and is set on the output shaft (58), at the one end of it, connects to the passive part of the solar gear of the start system (1), and the other end, it connects to the active gear (31) of the active part of the start system (1). And it connects the passive part in solar gear (11) with the active part of the input power in the active gear (31) of the speed switching system (3). It can function as the sate in connecting to the engine when it transmit the power from the start system (1) to the speed switching system (3), or in the state of engine assisted braking when it connected to the parking gear (35) of the output shaft (58).

The engine assisted braking switching system (2) has two functions: One is transmitting power which transmits power to the speed switching system (3), two is functioning as the inertia redirected counter force auxiliary brake.

In the real case, as shown in figures 1, 5A to 5D the engine assisted braking switching system (2), also includes an engine brake drive ring (32A), and the switching device of the two counter-directed one-way bearings (33A), (34A). The drive ring (32A) passing through the spline which is attached to the passive part of the start system (1) that is the solar gear (11). The one-way bearing (33A) resides in between the drive ring (32A) and the active part of the input active gear (31) of the speed switching system (3). And when the rotating speed of the drive ring (32A) is greater than the input active gear (31), the power is transmitted from the start system (1) to the speed switching system (3), on the other hand, it will be idle and no power is transmitted.

Another one-way bearing (34A), resides in between drive ring (32A) and parking gear (35), when the rotating speed of the parking gear (35) is greater than that of drive ring (32A), it will transmit the power from the parking ring (35) to the drive ring (32A) and further to the start system (1), on the other hand it will be idle and no power transmitted. A bearing resides in between the parking gear (35) and the shell of the main machine.

When the automobile is put in the forward gear or the backward gear, the power source that is the rotating speed of the engine output shaft, raised more than 10% from the idling speed, and it will be detected by the sensor-detector device (will be described later) and trigger to start the brake bandage electrical motor (110). It will drive the brake bandage mandrel (19) to make the brake bandage braking the ring gear (18) and prohibits its rotation, further it will make the motionless solar gear (11) start to turn. At this moment, the drive ring (32A) will turn with the solar gear (11), and when its rotating speed is greater than the input active gear (31) the one-way bearing starts to transmit power. Thus through the drive ring (32A) and the one-way bearing (33A), to turn on the input active gear (31) and delivering power to the speed switching system (3). The power delivering route, as shown in the arrows of the figure 5A, it passes through the speed switching system, gear selection system (4), output shaft (68), to provide the required rotating speed to drive the automobile forward or backward.

As for the Implementation of the engine assisted braking process, when the driver lifts from the acceleration pedal, the rotating speed of the engine output shaft will be reduced, but the output shaft (68) rotating speed is still large that is the rotating speed of the input active gear (31) is still larger than the driving ring of the solar gear (11). On both inner-sides of the drive ring (32A) it install one-way bearings (33A), (34A), which will rotate with the rotating speed depend on the speed differential to bring various kinds of driving states. The one-way bearing (33A) no longer deliver power to the input active gear (31), that is no power to the speed switching system (3). The drive ring (32A) will be idled, and, at the same time, since the output shaft (58) and the active bevel gear (61) of the gear selection system (4) are solidly connected, its rotating speed is larger than that of drive ring (32A), the counter-directed installed One-way bearing (34A) will transmit the power from output shaft (58) to the drive ring (32A), further to the solar gear (11), as shown in the arrows of the power transmitting route figure 5A, and producing the effect of the engine assisted braking.

As shown in the figure 5C it shows the C-C structure cross-sectional view of the figure 5A, when the drive ring (32A) rotating speed is larger than that of the input active gear (31), one-way bearing (33A) will trigger the rotation of the input active gear (31), on the other hand it will be idled.

As shown in the figure 5D it shows the D-D structure cross-sectional view of the figure 5B. When the automobile is in downhill or not stepping on the acceleration pedal, the rotating speed of the output shaft (58) larger than that of the solar gear (11) that is the rotating speed of the drive ring (32A). The power is transmitted from the output shaft (58) through the parking gear (35), One-way bearing (34A) to drive the rotation of the drive ring (32A) and solar gear (11) to produce the effect of the brake on the engine.

When the one-way bearing (33A) ( as shown in the figure 5C) has the rotating speed of the outer circle is larger than the inner circle the one-way bearing (33A) will trigger the inner circle rotation with it, on the other hand it will produce idling. As shown in the figure 5D, the one-way bearing (34A) inner circle rotating speed is larger than that of the outer circle, it will trigger the outer circle rotation with it, on the other hand it will produce idling. In the above mentioned two states have the same rotating direction the difference is the speed differential of the inner and outer circles in the one-way bearings to produce the driving or idle.

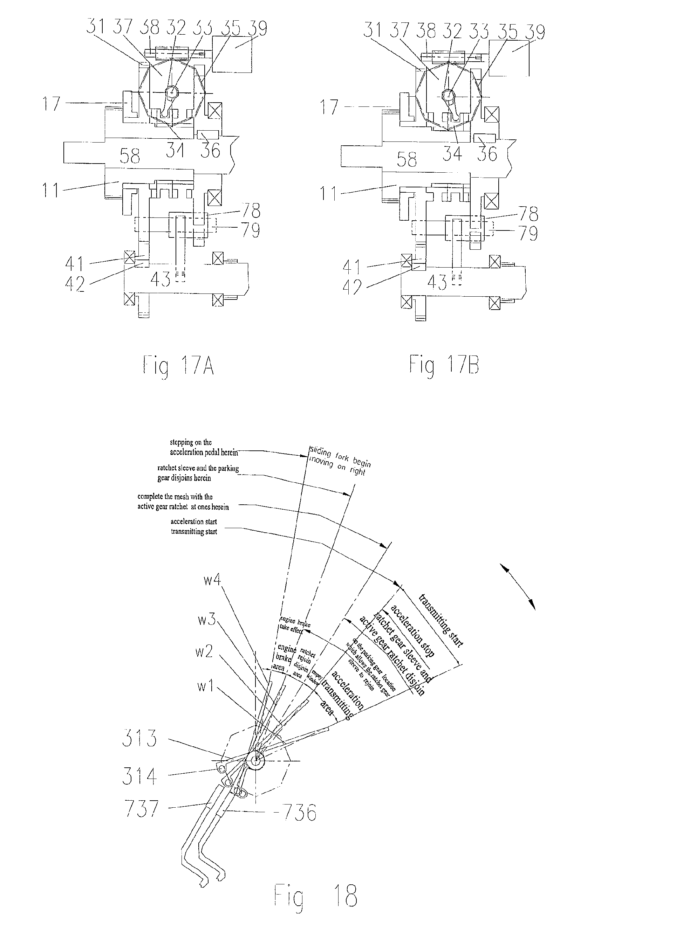

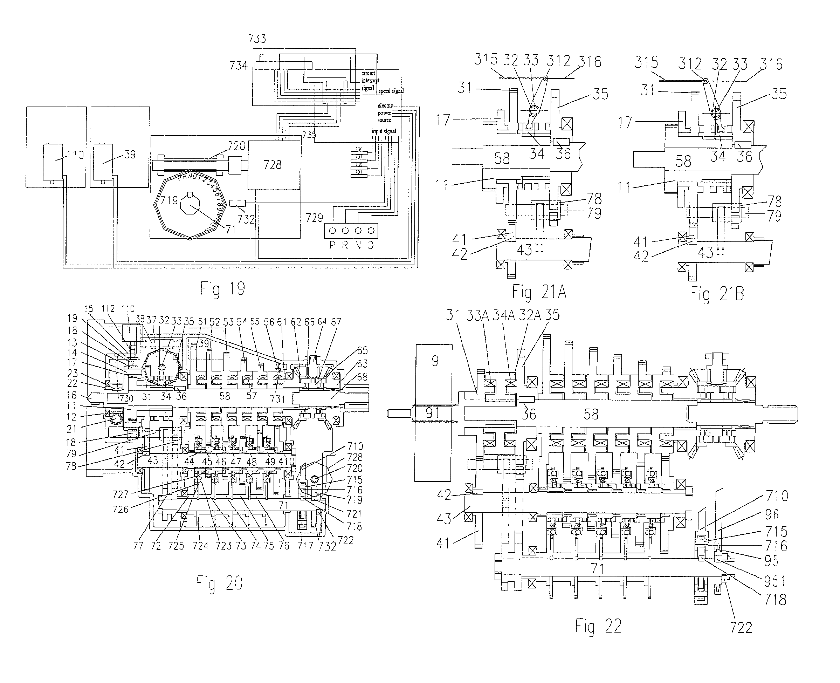

There are two other engine assisted braking switching system (2) alternatives (see figures 17A, 17B, 20, 21A, 21B). As shown in the figures 20 and 17A, 17B, it is an electrical control switching of the engine assisted braking switching system and contains a ratchet sleeve (34) and a driving device. The ratchet sleeve (34), through the spline, it can move to solidly connect to the solar gear (11). The ratchet sleeve (34) installed in between the input active gear (31) and the parking gear (35). On the two sides of the ratchet sleeve (34) installs ratchets. The input active gear (31) and the parking gear (35) are meshed with the ratchets on the both sides of ratchet sleeve (34).

It also includes a driving device which contains an engine brake switching fork (32) which at one end attaches to the circular grooves of the outer cylinder of the ratchet sleeve (34) and the other end attaches to the engine brake switching fork (32) on the switching fork shaft (33). Included is the electric switch engine braking (39). There is a transmission device in between the electric switch engine braking (39) and the engine brake switching fork (32). The transmission device in this implementation includes the fork shaft worm gear shaft (38) and fork shaft cochlear disc (37) to form the cochlear wheel worm gear shaft transmission device.

On the satellite gear frame (16) in the left side of the start system (1) and on the neighboring machine shell install some basic sensors (730) which used in the start and stop of the brake bandage electrical motor (110). Further, in the output gear (56) in the speed switching system (3) and the neighboring main machine shell install sensors (731) and to combine with the previously mentioned sensors (730) to control the starting and the stopping of the electric switch engine braking (39).

According to another embodiment, when the automobile is put in the forward gear or the backward gear, the power source that is the rotating speed of the engine output shaft, raised more than 10 % from the idling speed, the sensor-detector (730) to detect the rotating speed of the starter output shaft and issues command signals to the On/Off control of the brake bandage electrical motor (110) to start it. Once the brake bandage electrical motor (110) started, It will drive the brake bandage mandrel (19) to make the brake bandage tightly brakes the ring gear (18) and prohibits its rotation. This will make the motionless solar gear (11) start to turn. After that, through the engine braking ratchet sleeve (34) to lead the input active gear (31) start to turn and further delivers power to the speed switching system (3). Passing through the speed switching system (3), gear selection system (4), and output shaft (68) to deliver the power that required in driving the car forward or backward.

As for the implementation of the engine assisted braking process, when the output shaft (68) rotating speed is greater than the left satellite gear frame (16), the electric switch engine braking (39) starts. Passing through driving fork shaft cochlear disc (37) rotation, it will lead the fork shaft (33) to rotate. And this will make the engine brake switching fork (32) to move counter clockwise and leads the engine brake ratchet sleeve (34) to move to the right, and detach from the input active gear (31) to mesh with the parking gear (35), to realize the auxiliary braking.

As shown in figures 21A and 21B, it is another manual control braking switching device. Based on the above mentioned electrical control brake switching device, eliminating the electric switch engine braking (39), and the transmission device that composed of the fork shaft worm gear shaft (38) and the fork shaft cochlear disc (37). Besides, no sensor (731) is needed. Instead, in replacing the electric switch engine braking (39) using a cable implementation. The acceleration pedal is used to control engine brake switch fork (32) movement. On top of the engine brake switching fork (32) places a push handle (312). On the one side of the top part connect a throttle cable (315) and another side in between the shell of the main machine connect a spring (316). The throttle cable (315) is connected to the driver area. The driver can, through the pulling of the cable, control the engine brake switching fork (32), as described in the figure 21B, to perform the auxiliary brake.

When the throttle cable (315) loosens the spring force of the spring (316), it can restore the delivering of the power. As shown in the figure 21A the cable is connected to the throttle, and it describes the full throttle, no acceleration and the responses from the engine assisted braking. As shown in the figure 21B, it describes the acceleration effects that produced by the stepping on the acceleration pedal and within the free traveling distance. As shown in the figure 21A, the configurations can reduce the cost and fulfils the need of various switching requirements.

As shown in the Figure 18, it can also install a permanent magnet (314) on the acceleration pedal (313), on the corresponding position of the car chassis installs a motion sensor (737) and an engine braking sensor (736) to coordinate with the above mentioned electrical control switching device and to connect to the electric switch engine braking (39) to perform the switching between the engine and the auxiliary brake. For example, the engine braking sensor (736) installs on the acceleration pedal (313), the motion sensor (737) is installed on the corresponding position in the driver area.

The electric switch engine braking (39) in the auxiliary driver to the above mentioned electrical control switching device, it installs on the acceleration pedal (313) some portion of the permanent magnet (314) of the sensor. In the driver area, in the corresponding position of the pedals, installs the rest of the sensors in the following four positions:
W1: On the brake pedal corresponding to the full open throttle.
W2: On the accelerations start or stop positions.
W3: The position of the active gear (31) in the speed switching system (3) with setting that allows the ratchet sleeve (34) to join or disjoin
W4: The parking gear (35) position with setting that allows the ratchet sleeve (34) to join or disjoin

The positioning information will pass to the PLC to further transmit the turn on/off of the signals to the electric switch engine braking (39) to perform the engine and the auxiliary brake switching at the appropriate time.

When stepping on the acceleration pedal (313), corresponding to the position w4, the electric switch engine braking (39) lead to move engine brake switch fork (32) to the right, and further stepping on the acceleration pedal to the corresponding position w3, the ratchet sleeve (34) and the parking gear (35) disjoins from meshing and this is the starting point of the transmission of the power. When the acceleration pedal (313) is stepping to the corresponding w2 position, the acceleration starts. Before reaching W2 the ratchet sleeve (34) will complete the meshing with the input active gear (31). When the acceleration pedal (313) is stepped on to the corresponding w1 position, the throttle is full open, and within w1 and w2 travelling angles, it is at the acceleration stage. The transmission of the power is executed during this stage. On the other hand, during the release of the gas pedal, it will change position from the full throttle angle of w1 to the position in w2, the acceleration stopped, and continue to release the acceleration pedal (313), the ratchet sleeve (34) will disjoin from the input active gear (31), to reach w3 position, and will complete the mesh with the parking gear (35).

When the acceleration pedal (313) reaches w4 position, the engine auxiliary brake is in effect.

The speed switching system (3), as shown in figure 6, is a speed switching gear set device. It includes the meshed input gear set and the output gear set, The input gear set is installed on the input shaft (43) and the output gear set is installed on the output shaft (58). The gears in the input gear set are one on one meshed with the gears from the output gear set. And a pair of the meshed input gear and output gear to form a row of speed switching gear set. Among the active parts, that is the input active gear (31), meshed with the input passive gear (41) which solidly set on the input shaft (43). On the input shaft (43) there is a fastened gear to serve as the input gear of the first row gear set, and it meshed with the first output gear (51) in the first row of speed switching gear set. The other input gears (46), (47), (48), (49), (410), ... all installed on the input shaft (43),and the output gears (52), (53), (54), (55), (56), ...all installed on the output shaft (58), and meshes the corresponding gear in the input gear set, to form several rows of the speed switching gear set.

The output gear in the last row of the speed switching gear set is the output gear (56) of the speed switching system (3). The input passive gear (41) through key (42) is fastened on the input shaft (43) and meshed with the input active gear (31). When the power is transmitted, the input shaft (43) obtains power and start rotating. The gear installed on the input shaft (43), that is the first gear in the input gear set will mesh with the first output gear (51) on the output shaft (58), thus the rotation of the input shaft (43) can move all the gears in the input gear set and the gears in the output gear set which are one on one meshed. In between each neighboring input gears on the input shaft (43) installs devices that can connect the neighboring gear to form a synchronized bodies or detached to spin idle. Current technology has many devices can perform this function. In the implementation a spring-like (45) device is adopted, see the followings for the details of the structure descriptions.

On the output shaft (58) put a series of output gears and in between gears places one-way bearing and connected to each other, so either the faster turned output gear can bring up the turning speed of the slower output gear. Or, when the turning speed is low the lower speed will synchronized the whole gear set and at the high speed only the high speed gear turning and the lower speed gears are idle. Through the control of the join or disjoin of the input gears and its neighboring input gears this can, through the speed switching system (3), transmits various speeds to the output shaft (68) to achieve the purpose of speed switching.

A pair of meshed input gear and output gear is called a row. The corresponding number of rows of the gear set n, and the number of the speed switching capable s; with this governor implementation there are: 4 rows for 8 speeds, 5 rows for 16 speeds, 6 rows for 32 speeds, or in general s=2ⁿ⁻¹; if n=7 s=2⁷⁻¹=64, n=10, s=2¹⁰⁻¹=512 speed switching are capable, and the n, the number of the meshed gear rows, is not limited.

When n=4, the states of speed switching as shown in the figure 8, which has 8 speed states. Following example using 4 rows of gear sets to explain the speed switching states, and as the figure 8 indicated:

First Gear operating condition:

The engine output power, through the power reception disk to transfer the power to speed switching system (3), and through the input active gear (31) of the engine assisted braking device, which performs braking and switching, into the input passive gear (41). Further transmits the power to the input shaft (43). And through the gear on the body of the input shaft (43) to mesh with the output gear 1(51), and simultaneously the output gear 2(52), output gear 3(53) and the output gear 4(54) all synchronized with the output gear 1(51). Then it passes through the rear of the output sleeve (65) in the front/rear gear switching of the gear selection system (4), to transmit a constant turning speed to the output shaft (68). The power transmitting route as shown in the figure 8.a when the engine turning speed is 1100rpm, the governor is in the first gear, when the engine continue to accelerate to 1824rpm,it prepares to enter into the second gear.

Second Gear operating condition:

The engine output power, through the power reception disk to transfer the power to speed switching system, and through the input active gear (31) of the engine assisted braking device, which performs braking and switching, into the input passive gear (41). Further transmits the power to the input shaft (43). It further transmit the power to the gears on the body of the input shaft, such as the output gear 1(51), the output gear 2(52), input gear 2(46), spring-like device (452), input gear 3(47), output gear 3(53), and the output gear 4(54). Then it passes through the rear of the output sleeve (65) in the front/rear gear switching of the gear selection system (4), to transmit a constant turning speed to the output shaft (68). The simple power transmitting route illustration as shown in the figure 8A.e, it shows that when the engine rotating speed reduced from 1824 rpm to 1152 rpm the governor entering into the second gear, then when the engine accelerated to 2304rpm, it prepares to enter into the third gear.

Third Gear operating condition:

The third gear power transmitting route illustrations as shown in the figure 8A.b. When the engine rotating speed is reduced from 2304 rpm to 1577rpm, the governor is entering the third gear, and then accelerated to 2760 rpm, it prepares to enter into the fourth gear.

Fourth Gear operating condition:

The engine outputs power, passing through the power reception disk transmits power to the speed switching system, then to the input active gear (31), input passive gear (41), and the gears on input shaft (43) such as spring-like device (451), input gear 2(46), spring-like device (452), input gear 3(47), output gear 3(53), and output gear 4 (54), then further passes through the rear of the output sleeve (65) in the front/rear gear switching of the gear selection system (4), to transmit a constant turning speed to the output shaft (68).

The power transmitting routes as shown in the figure 8A.c, when the engine rotating speed is reduced from 2760 rpm to 1742 rpm, the governor is entering the fourth gear, and then accelerated to 2738 rpm, it prepares to enter into the fifth gear.

Fifth Gear operating condition:

The engine outputs power, passing through the power reception disk transmits power to the speed switching system, then to the input active gear (31), input passive gear (41), and the gears on input shaft(43) such as spring-like device (451), input gear 2(46), spring-like device (452), input gear 3(47), spring-like device (453), input gear 4(48), output gear, and output gear 4 (54), then further passes through the rear of the output sleeve (65) in the front/rear gear switching of the gear selection system(4), to transmit a constant turning speed to the output shaft (68). The power transmitting routes as shown in the figure 8A.d, when the engine rotating speed is reduced from 2738 rpm to 1995 rpm, the governor is entering the fifth gear, and then accelerated to 6500 rpm, the maximum rotating speed allowed (This is 5 gears setup in this example, and the fifth gear is the top gear), the governor is rotated at a uniform speed. To brake, the governor will shift from 5th,4th, 3rd, 2nd, and to 1st to gradually reducing the gear in the D gear, and finally, reduced to 1000 rpm, which is the engine idling speed.

At the present time, only 5 gears, that is 5 speeds switching is implemented. The number of gears is based on the customer's request. Since it is a 4 rows gears, it can be set to 8 speeds. If the set-up of the automatic control and the control panel changed to 8 speeds, there will be additional 3 gears available. The power transmitting routes of the other 3 additional gears can be seen in figures 8A.

If the speed switching system (3) includes 5 rows of gear set, it can have 16 speed variations to select. The variations are shown in figure 8B.

If the speed switching system (3) includes 6 rows, it can have 32 speed variations. As shown in figures 1, 6, 7, and 20, the governors all have 6 rows of speed switching systems. Among them the first row of the input gear (It is a shaft gear which is in the same body as the input shaft) of the speed switching gear set meshes with the output gear (51) of the first row of the speed switching gear. The other input gears, all on input shaft (43), such as (46), (47), (48), (49), (410) are meshing with the corresponding output gears, all on the output shaft (58), such as output gear (52), (53), (54), (55), (56) to form several rows of the speed switching gear set. The output gear of the last row of the speed switching gear set is the passive output gear (56) of speed switching system (3).

As shown in the figure 8C, various configurations of 6 rows of gear set to obtain 32 speed switching. The spring-like device placed in between input gears which can be joined to form an integrated body or detached. The structure and the configurations between this spring-like structure and the input gears is : Using 6 rows of gear set as an example. At one end of every input gears (46),(47),(48),(49), and (410) from the second row to the last row of speed switching gear set to solidly attach to one end of the spring-like device (45). The other end of the spring-like device forms an empty cavity. The cylinder of the prior input gear resides in the cavity which formed by the spring-like device (45). At the end of the cavity which is formed by the spring-like device (45) has a joint corresponds to a ratchet gear. Corresponding to it, the neighboring input gear at the same end in the side also set a matching joint. Install a driving device on the input shaft (43) which is in between two joints. This driving device will move to force the spring-like device to compress and which will make the neighboring input gear joint to detach, and the release of the compression pressure will reconnect the joints. This driving spring-like device to function as the attaching or detaching device to the input gear is a kind of simple pull-push device, and the driving device is connected to the control mechanism of the speed switching control system (5).

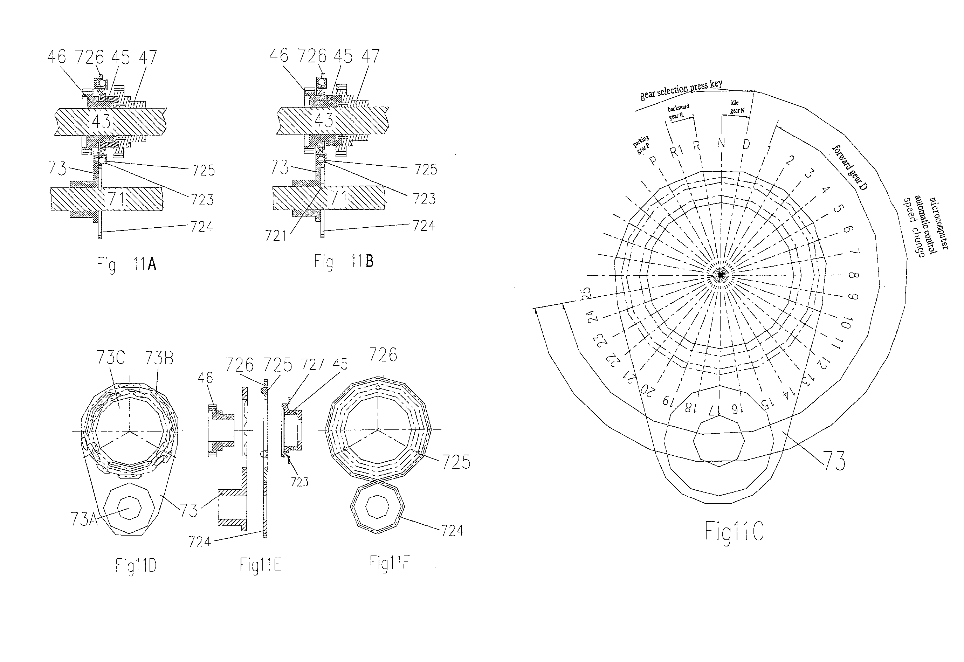

The control mechanism related to the speed switching adjuster of speed switching system (3), is a simple pull-push device. As shown in figures 11A-11F, this simple pull-push device includes control active part that is the top bead locating active gear disk (724), the control passive part that is the top bead locating passive gear disk (726). Correspondingly, the driving device includes speed switching control panel (723) and speed switching bracket (73); as shown in figures 1, 20, 7, 11A, and 11B.

The speed switching bracket (73) of input shaft (43) is placed in between two neighboring input gear (46), (47). As shown in figure 1,in the current implementation, there are 6 input output gear pairs , 5 of them are speed switching bracket; speed switching bracket 1 (72), speed switching bracket 2(73), speed switching bracket 3(74), speed switching bracket 4(75), and speed switching bracket 5(76). We choose one of them to describe the simple pull-push device and the driving device as shown in figures 11A∼11F. The speed switching bracket (73) is has plate shape as shown in figure 11D. There are two through holes (73A), (73C). Through the through hole (73A) one end of the speed switching bracket (73) join the speed switching control shaft (71), and through the through hole (73C) the other end of speed switching bracket (73) is joined with the cylinder of previous input gear (46). On the outer circumference of through hole (73C) and the circumference of the concentric of this through hole have several arched groove shape groove track (73B). The groove track (73B) subdivided into several groups, the number of groups is corresponding to the number of input-output gear rows. Or, corresponding to the number of speeds required. In this implementation there are 6 groove tracks, and each groove track is evenly distributed on one circle. In this implementation, each set of groove track has 3 tracks and cross section at 120 degree. In order to spread the 6 groove track sets to evenly distribute on the circle, 3 concentric circles are considered. The groove tracks in one groove track set are placed in 3 separate concentric circles, the length of each groove track are differ to accommodate the 32 speed switching demand. The speed switching control panel (723) is placed on outside of spring-like device (45) of output shaft (43) and a bearing is placed in between the control panel and the spring-like device (45). This bearing is a deep groove ball bearings (727). Its function is to facilitate the speed switching in spring-like device when the input gear (47) rotate and the control panel (723) stay still.

As shown in figures 11A, 11E, in between speed switching bracket (73) and spring-like device (45), on input shaft (43), set up a top bead passive gear disk (726) which is connect to neighboring speed switching control panel (723). On the circumference of top bead passive gear disk (726), set up top bead holes (726a). These holes corresponding to groove tracks situated on the edge of through holes (73C) in speed switching bracket (73), and distributed with the same circular angle, and position. Three holes are distributed on circumferences of three concentric circles. On the speed switching control shaft (71), through key (721), the top bead locating active gear disk (724) is meshed with top bead locating passive gear disk (726). The top bead holes (726a) of top bead locating passive gear disk (726) and the groove tracks (73C) of the speed switching bracket (73) aligned to form a capacity space, in which is placed a top bead (725). The diameter of this top bead (725) is greater than the depth of the groove track (73B) of the speed switching bracket (73), also greater than the hole on top bead locating passive gear disk (726), but smaller than the sum of two previous measurements from the groove track (73B) and the top bead hole (726a).

On the output shaft (58) set up an output gear set which includes a series of output gears (51), (52), (53), (54), (55), and (56). In between gears, there is an one-way bearing to connect gears to facilitate the relatively faster output gears can lead the lower speed output gear synchronized with the faster one. At the high speed, only the high speed gear engaged and the lower speed gears are idle.

The speed switching system (3) which includes a simple pull-push device with 3 top beads, 3 groove tracks, the input gear set which connected to driving device, the output gear set that one on one meshed with the input gears and in between is one-way bearing. Following is the process of the speed switching system (3) worked under the control of speed switching control system (5).

The process of the speed switching system working under the control of speed switching control system is described below.

A : On input gear set, it sets up the speed switching bracket (73). On the disk surface of speed switching bracket (73) has groove track with depth of the groove is greater than the height of ratchet gear in spring-like device (45). In the groove, it placed top bead (725). Outside of the top bead it has a speed switching control panel (723) with pull-push spring-like device (45). In between the speed switching control panel (723) and speed switching bracket (73) places a top bead locating passive gear disk (726) which equipped with the function of speed switching control.

Solidly based on speed switching control shaft (71) is a top bead locating active gear disk (724) which will be turned with the speed switching control shaft (71). The top bead (725), either in or out of groove, will roll down or up depending on the depth of the groove. And further lead to the rotation of the speed switching control panel (723). This can either move or loosen the spring-like device. As shown in figure 11A, the turning speed switching control shaft (71) will also turn top bead locating passive gear disk (726) in speed switching control relative to the turning of speed switching bracket (73). This will lead the top bead (725) come out of groove track (73B), and toward the right to move speed switching control panel (723) and release the spring-like device (45) compression to allow the two gears in the front and back, that is input gears (46) and (47), to detach, and free spins independently.

As shown in figure 11B, the turning of speed switching control shaft (71) leads to the top bead (725) dropped into the groove of speed switching bracket (73). The spring-like device (45) turn left to move the speed switching control panel (723), and the ratchet gear of the spring-like device will mesh with the ratchet gear in input gear (46) to produce torque turn, at this time the spring-like device (45) subjected to the rotating torque its inner diameter reduced to tightly embrace the input gear (46) and further transmit this power to input gear (47). The input gear (47) will rotate with the same speed as input gear (46). Further lead to the rotation of output gear (53) to produce the speed switching transmission. The input gears in the input gear set that lead to the turning output gears, all based on this process to produce speed switching.

B : Output gear set and each individual output gear, all equipped with one-way bearing tightly tugged in the inner side of the gear. First gear is when the input gear transmits the power to output gear 1 (51). The power is transmitted through the function of one-way bearing to the output shaft. At the high speed gear, the one-way bearing in lower speed gears will produce idle spin at different speed.

Based on the combination of the operating process described in A and B, it produces numerous gear switching.

The speed switching control system (5) product has the following characteristics:

1. The spring-like device unit equipped with strong twist force: The force that spring-like unit embraces the shaft is increased by 4 folds with the addition of one more circular length of the spring. For example, if the first circular twist force is 2.4/Kg-m the twist force can be increased without any limitation, this can lead to a small spring can be used to carry heavy weight like the heavy weighted truck.

2. No fatigue problem: Each gear switching takes only 0.5 second, and assuming the automobile has one speed switch per minute, the working frequency of the spring-like device is only 1 per minute versus the spring in textile machine which is 3000 per minute and the engine valve spring the working frequency is in the tens of thousands. Due to this low working frequency, no fatigue of the spring-like device will be observed during the life of the product.

3. No friction problem: When the spring-like unit embrace the shaft, it will turn with the shaft, and no significant friction produced, when detached, no frictions between the spring-like unit and the shaft. Only during the process of embracing the shaft, it produces some frictions.

4. The spring-like unit is in a pure circular motion, and it is suitable for high speed rotation applications, the inner diameter differential is less than 0.8mm during the process of tightening and loosing. So there will be no fatigue problem during operation.

5. The spring-like unit with the engagement and detachment operation of the inner circle of the unit and the outer circle of the shaft is highly accurate. When pushing-tube pushes 4/mm(4mm) it will detach, and pull 4/mm(4mm) it will engage.

6. Sensitive Control, Each dialed of one mark in speed switching control panel, the speed switching process will be completed, it is sensitive to the control instructions.

7. It can easily revised to achieve the driving mode of front wheel drive, rear wheel drive, or four wheels drive. Only minor revision in the design is needed.

8. To achieve the manual or automatic transmission, it only requires minor revisions in the automatic controller (it is a control device in intensive system). The manual, automatic control mechanism will be discussed later.

The optimum switching settings can be obtained based on the various power curves to determine the optimum rotating speed and torque. These values can be stored in PLC to achieve the best of the operational efficiency.

As to the gear selection system(4), as shown in figures 1, 6, 9A-9D and 10A-10B, which includes active bevel gear (61), intermediate bevel gear (62), passive bevel gear (63), sliding fork shaft (69), forward-backward control panel (717), front sliding fork (66), rear sliding fork (67), output sleeve (65), together it is a bevel gear reverse direction device. Active bevel gear (61) is set up on output shaft (58). Active bevel gear (61) and output shaft (58) are solidly connected through a spline, it also connected , through one-way bearing, to the last output gear (56) in the output gear set. It turns with the output rotating speed and direction of the speed switching system (3) n0.

On the output shaft (68), set up a solid based bearing. On this bearing set a solidly based passive bevel gear (63). In between active bevel gear (61) and passive bevel gear (63) is the Intermediate bevel gear (62) which meshes with the active bevel gear (61) and passive bevel gear (63). On it, connect to the intermediate bevel gear shaft (64) and rotatable fastened on the main machine shell. On active bevel gear (61), in between the passive bevel gear (63) and the main machine shell it set up a bearing. The output sleeve (65) through the spline is solidly placed and capable of sliding on the output shaft (68).

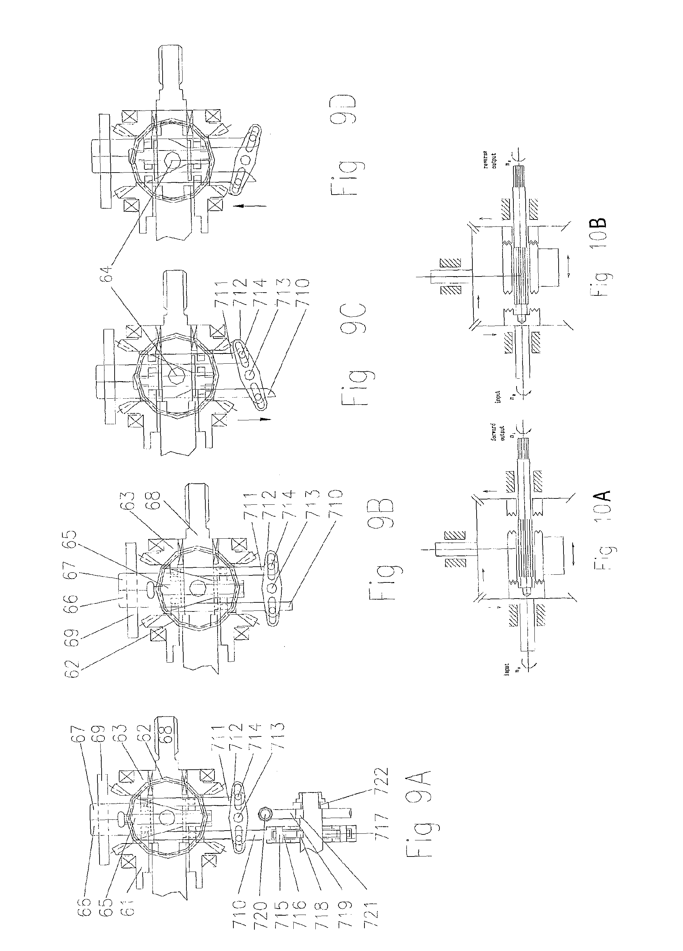

On both sides attached ratchet gears. On the corresponding ends of the active bevel gear (61) and passive bevel gear (63) it also set up ratchet gears. When the output sleeve (65) move leftward, and mesh with the active bevel gear (61), it detached from passive bevel gear (63). The power from active bevel gear (61) is directly transmitted to output shaft (68). At this time the rotation of passive bevel gear (63) is independent of the output shaft (68). The output shaft (68) is obtaining the output rotating vector n1; when output sleeve (65) move to the right and detached from active bevel gear (61) and meshed with passive bevel gear (63), power from active bevel gear (61) through intermediate bevel gear (62) to reach passive bevel gear (63) and further to output sleeve (65). This let output shaft (68) obtains the reverse output rotating vector n2 (see figures 10A, 10B). For this, it allows the switching to forward or backward gears.

When the output sleeve (65) located in the middle which neither meshed with the active bevel gear (61) nor meshed with passive bevel gear (63), the output shaft (68) is still motionless that is idling. The left, right, or stay in the middle movements of the output sleeve (65) is controlled by the control device which is installed on speed switching control shaft (71).

As shown in figures 9A∼9D, this control device comprises one front fork (710) and one rear fork (711). These two forks are set up on the right side and the left side of output sleeve (65), the contact surface of these two forks with output sleeve (65) are in relative slanted surfaces. One balance board (712) has its center position solidly attaches to the balance board shaft (713) of the main machine shell. On the balance boards (712) which positioned on both sides of balance board shaft (713), it has long hole joint. Through the pin (714) each joint, such as, the middle of front fork (710) and the end of rear fork (711), the pin (714) can move through the long hole. As shown in figure 17, the bottom of front fork (710) is an enclosed frame. One control panel (717) which can control the forward and backward through the key (718) to fastened on the speed switching control shaft (71). And on front fork (710) enclosed frame, the control panel (717) set up a roller shaft (715). On roller shaft (715) join with the roller wheel (716) and contact with the forward-backward control panel (717) to form a cam wheel device. The forward-backward control panel rotates on the speed switching control shaft (71) to lead to the front fork (710) up-down motion.

From the above descriptions, we know that gear selection and the speed switching all realized through the turning of speed switching control shaft (71). Thus, the speed switching control system (5) includes one control driving device, one driving motor (728) and/or a manual driving device.

The control driving device of speed switching control system (5) includes one driving motor (728) and/or manual driving device, through the transmitting device to connect to Speed switching control shaft (71). As shown in figures 9A∼9D and 16, 16A implementation examples, the transmitting device is a cochlear wheel worm gear shaft transmitting device : On Speed switching control shaft (71) set up a worm gear plate (719), passing through the nut (722) and solidly attached on speed switching control shaft (71). On the worm gear plate (719) which meshed with the worm gear shaft (720) has a driving motor (728).

The driving motor (728) passes through the worm gear plate (719) leads worm gear shaft (720) to move, this makes the speed switching control shaft turns to an angle which allows passing through of the forward-backward control panel (717) to pull down or push up the front fork (710). The reversing driving motor (728), if push upward to move the front fork (710) which makes the output sleeve (65) to move toward right and deliver the backward movement, and if pull down the front fork (710) to make the output sleeve (65) to move toward left and deliver the forward movement. If the control panel (717) turns to an angle which makes the balance board (712) at levelling position, which makes the output sleeve (65) sitting in the middle and makes the output shaft (68) staying still, the corresponding gear is idle. This makes the output shaft (68) to pass through bevel gear reversing device to change direction.

On speed switching control shaft (71) it has a speed switching adjuster related speed switching control device (3) in the speed switching system (3) and the control device which relates to gear shifting part of output sleeve (65) in gear selection system (4).

The simple pull-push devices on adjuster speed switching control shaft (71) will correspond to the backward, forward, or idling gear in gear selection system (4) and deliver the appropriate speeds that required in corresponding gears.

The motor (728) driving speed switching control shaft (71) rotating, and making a series of top bead locating active gear disks (724) on the shaft to rotate with it. This will make top bead locating passive gear disks (726) to turn. This makes the top bead (725) in input gear entering into the groove track of speed switching bracket (72). Some top beads (725) will come out off groove track and pushes the spring-like device to make it disjoin from the neighboring input gear. Or, when the pushing force ceases to exist, it will join with the neighboring input gear. From this, we can achieve various gears of output rotating speeds.

The forward gear, backward gear, idling gear and the output rotating speed is matched by the operation requirements. Through the design the following parameters settings such as; the set of lengths of groove tracks on speed switching bracket, the relative positions among the set of groove tracks, its angles with the forward-backward control panel (717), the installed positions, and the rotating angle of pull-push front fork; will match forward gear, backward gear, idling gear and parking gear (will describe later).

When the power source is at idling speed, the brake bandage electrical motor (110) will not start, and the solar gear (11) staying still and not to drive input active gear (31), the active bevel gear (61), intermediate bevel gear (62), and passive bevel gear (63) all stay still. Corresponding to this, the angle of speed switching control shaft (71) is making the balance board (712) level and connect to none of the active bevel gear (61), and passive bevel gear (63), that is it is in the idling gear. Please refer to figure 11C N angle for details.

When the power source is at the higher than idling speed and at the forward gear positive transmitting process, it is in forward D gear: And the process is as followings: The brake bandage electrical motor (110) will start, the power transmits from input active gear (31) into speed switching system which includes input gears and output gears. Through PLC driven or key-in (729) driven, the stepper motor or servo motor (728) will move worm gear shaft (720), further moves worm gear plate (719) to make speed switching control shaft (71) to turn to an angle. Refer figure 11C to see the angles between D and 1, 2, 3, ..., 25, or, through the manual device to allows the speed switching control shaft (71) to pass through these angles. Within an angle, it will pass through speed switching brackets (72), (73), (74), (75) and (76), top bead locating active and passive gear disks (724), (726), will operate according to the design settings and realize the gear switching, for example, from the first gear to fifth gear, or other gear shifting sequences either up or down shift.

Within this angle, the forward-backward control panel (717) will turn through an angle and makes front fork (710) to be pull down and the rear fork (711) to be pushed up and making the output sleeve (65) moving toward left (see figure 9C) and meshes to the ratchet gear of active bevel gear (61) on the left. It becomes the forward gear and the power following the active bevel gear (61), output sleeve (65) spline, output shaft (68), through this transmitting route to output the power in positive direction.

During the positive output, the intermediate bevel gear (62) and the passive bevel gear (63) are in no power idling spin, thus power loss and the noise generation all keeps to minimum.

During backward reverse transmitting process, passing through PLC driven or key-in (729) driven the stepper motor or servo motor (728) will move worm gear shaft (720), further moves worm gear plate (719) to make speed switching control shaft (71) reverse turn through an angle (refer to R-R1 in figures 11C for more details), or, through the manual device to allows the speed switching control shaft (71) to pass through these angles. The forward-backward control panel (717) will turn and lead to the front fork (710) being pushed up and the rear fork (711) being pull down. It becomes backward R gear.

At this time the top bead locating active gear disks (724) turn and drive top bead locating passive gear disk (726) and interact with the corresponding speed switching bracket (72), to make top bead (725) in speed switching control groove track to come out, and passing through the speed switching control panel (723) to move the spring-like device (45), that is to execute the backward in the second gear. The output sleeve (65) moving toward right, and let the right side

Ratchet gear of output sleeve (65) to mesh with the ratchet gear of the passive bevel gear (63). The power will follow active bevel gear (61), intermediate bevel gear (62), passive bevel gear (63), output sleeve (65) spline, output shaft (68), through this transmitting route to output the power in reverse direction.

During the reverse power output, all bevel gears are transmitting power, and will loss some power during transmitting. However, most of the backward gear are done in lower speed and in short time, the overall power loss and the noise can keep to the minimum.

In summary, the above implementation of the backward operation is a reasonable design.

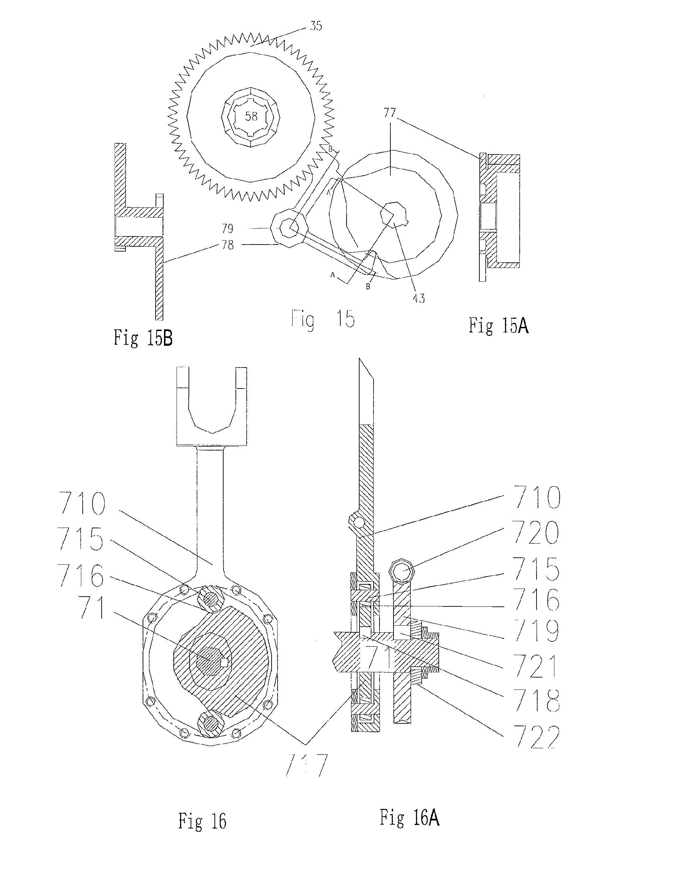

This invention of the governor also includes a parking device. As shown in figures 15, 15A 15B, it includes parking cam (77) on speed switching control shaft (71), on top, it touches and connects to a parking lock stick (78). This parking lock stick (78) through the fastened locking rod (79) solidly join on a box.

The parking lock stick (78) has two forks, one fork touch on the parking cam disk (77) and another fork has gears which can join or disjoin with the parking gear (35) which solidly based on the output shaft (58)

When the parking lock stick (78) is touching on a part of parking cam (77), another fork is detached from parking gear (35). The gear setting at this moment can be forward, backward, or idle.

When the parking cam (77) turns with speed switching control shaft (71) to an angle which makes one of the fork in parking lock stick (78) to touch another part of parking cam (77), the other fork can mesh with parking gear (35) and leads into the parking state. And the corresponding gear is in parking gear.

As shown in figure 7, it installed a control device K1 which is capable of controlling speed switching on speed switching control shaft (71) and provides the governor a forward gear D which can adjust and control the speeds 1 to 32. The control device K2 which is capable of the control of gear shift and provides the governor a forward gear D, Idle gear N, and backward gear R, also installed a control device K3 which is capable of controlling the parking lock to provide the parking lock control.

These controllers all located on one single speed switching control shaft. Through either an electrical or manual turning of this speed switching control shaft (71) one can control several devices and their matching functions.

The control device of an intensive system, that is based on the above mentioned structure, including, through the electrically controlled of driving motor, or through the comparisons of the rotating speed of the input shaft and output shaft which are collected from the sensors, or through the signal provided by driver through the key-in (729) to start corresponding motor (728), automatic adjuster speed switching, or change between forward and backward gears

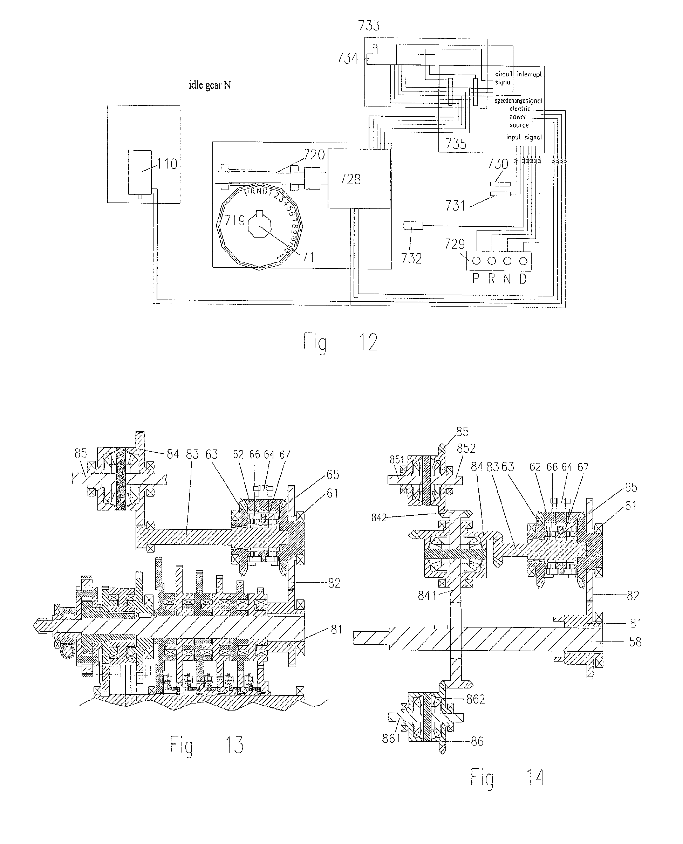

As shown in figure 12, it provides automatic control routing illustration of the implementation example in figure 1. In this implementation, the devices needed to be controlled are brake bandage electrical motor (110) and Motor (728).

In this governor it installs automatic control sensor-detector device, the configuration of this device is as follows:

On speed switching control shaft (71) of speed switching control system(5) it installs on the circumference of cochlear wheel disks(719) P, R, N, D, 1, 2, 3, 4, 5, 6, 7, 8, 9, 10, 11, 12..., sensors parts, and corresponding locations on the main machine shell installs detectors parts, to form the detector device (732) and will be used in the starting or stopping of the motor (728).

On the main device of satellite gear frame (16) of the active part of start system (1) and neighbouring main machine shell installs sensor (730).

On the output gear (56) of the passive part of speed switching system (3), and neighboring main machine shell installs sensor (731).

As shown in figure 12, it provides electrical control structure configuration illustration of the implementation example in figure 1.

When sensor (730) detects turning speed of satellite gear frame (16) in the active part of start system (1) is greater than the preset idle speed value of the automatic controller (735), it will start brake bandage electrical motor (110) to output power.

According to the signals provided by the driver, either idle (N), backward gear (R), parking gear (P), the electrical control system will feedback the detected signal to PLC to further control driving stepper motor or servo motor (728). Through worm gear shaft (720), worm gear plate (719), drive speed switching control shaft (71), lead to move forward-backward control panel (717),further move front fork (710). An when it is the idle gear N, the electrical control system will start to drive stepper motor, or servo motor (728), to turn to a preset angle, through worm gear shaft (720), worm gear plate (719), drive speed switching control shaft (71), further to drive speed switching control panel (723), to level (balance) front fork (710) and rear fork (711). The output sleeve (65) adjusted to the middle position to complete the idle process. At this time the output sleeve (65) does not mesh with the active bevel gear (61) or with the passive bevel gear.

At forward D gear, the stepper motor or the servo motor (728) drive worm gear shaft (720), worm gear plate (719), drive speed switching control shaft (71), further lead to move forward-backward control panel (717) and let front fork (710) being pull down and rear fork (711) being push up, and becomes the forward gear. At this time, the top bead locating active gear disk (724) and speed switching bracket (72), speed switching controlled top bead (725), speed switching control panel (723) will be change the settings base on the rotating speed from the power source(the driver step on the gas pedal) to a predetermined value to perform automatic speed switching, from 1st to 2nd , from 3rd to ... up to 32nd gear.

At backward gear R, the speed switching control shaft (71) drive forward-backward control panel (717) leads to front fork (710) being push up and rear fork (711) being pull down, further move output sleeve ( 65 )to mesh with the passive bevel gear( 63 ), and it become the backward gear R, at the same time, the top bead locating active gear disk (724) and the speed switching Bracket (72), top bead (725) of speed switching control, speed switching control panel (723) will effect the spring-like device to control and execute the function of backward in the 2nd gear. For detail processes of the above mentioned processes see figures 9, 10A, 10B, 11.

At parking gear P, the control device in the intensive electrical control system will provide commands to stepper motor or servo motor (728) to drive worm gear shaft (720), worm gear plate (719), also lead to rotate the speed switching control shaft (71) to let front fork (710) be pushed up and rear fork (711) be pulled down. At this time, the bevel gear sets are hooked on the backward passive bevel gear (63). In the meantime, the speed switching control shaft (71) move to rotate the installed parking cam (77), and push to move through the hinged shaft that is the parking lock stick (78) on fastened locking rod (79) and meshes with the parking gear (35). At this time, the parking gear (35) and output shaft (68) are joined and to achieve the effect of parking and locked.

The process described above is working in the rear wheel drive. For front wheel drive power governor, see figure 13, the basic structure is same as the rear drive except that at the end of process related to front fork, rear fork change the installation direction. As shown in figure 13, adds output shaft (83), namely the previously described output shaft (68) and installs the above mentioned bevel gear reversing device on output shaft (83), also adds a transmitting active gear (81) solidly on output shaft (58), and connect it to the last output gear with an one-way bearing. On the top of output shaft (83) install an active bevel gear (61) and on the through key located on the cylinder of the active bevel gear (61) solidly attach a gear (82) and mesh with the transmitting active gear (81). The output power of speed switching system passes through the transmitting active gear (81) to make active bevel gear (61) to rotate. On the output shaft (83) solidly installs a passive bevel gear (63), and in between the passive bevel gear (63) and active bevel gear (61) similarly install an intermediate bevel gear (62). The output sleeve (65) pass through spline to install, slidable, on output shaft (83) and also installed on output shaft (83) a speed differential (84) on it is a front differential (85).

Input power transmitting route is: Through the solar gear (11), satellite gear (13), drive ring (32A), input active gear (31), input passive gear (41), input gear set (46), (47), (48), (49) and output gear set (51), (52), (53), (54), (55), (56) on input shaft (43). Under the operation of the control device in an intensive electrical control system, according to the rotating speed of the input power, from the electrical control produce automatic speed switching.

The gear shifting for forward, backward is through a bevel gear set reversing device, according to the driver's command to determine the appropriate gear and switches to it. At the forward gear D, the control device in intensive electrical control system rotates the speed switching control shaft (71) and pulling down the front fork (710), pushing up the rear fork (711). It further move the output sleeve (65) to mesh with active bevel gear (61). The power from output gear (56), one-way bearing to turn the active gear (81), passive gear (82), active bevel gear (61), output sleeve (65), output shaft (83), to speed differential device (84), further to front differential (85) for output.

At backward gear R, the front fork (710) being pushed up, and the rear fork (711) being pulled down. Thus it moves the output sleeve (65) to mesh with the passive bevel gear (63). The power pass through output shaft (83), to speed differential device (84) further to front differential (85) for output, The speed is set at the 2nd gear.

At parking gear P, the control device of intensive electrical control system will operate according to the input signal and automatically switch the speed. When the car speed sensor indicating "0", it turns speed switching control shaft (71) and making parking lock stick (78) meshes with parking gear (35), and to achieve, at parking, the automatic governor and the output shaft (83) are locked. At this time, the bevel gear set is hooked on the reverse passive bevel gear (63).

The power governor of four wheels drive, as shown in figure 14, the basic structure and configuration is same as the front wheel or rear wheel drive, except the following connections which alter from the front wheel drive; On the output shaft (83) connect to speed differential device (84), connect speed differential device 1 (841) and second differential 2 (842), in the rear it connects front differential (85) and rear differential axle (86). Separately drives to rotate the front differential shaft 1(851), the front differential shaft 2(852), and rear differential shaft 1(861), and rear differential shaft 2(862).

As shown in figures 19, it shows the automatic control governor implementation structure and configurations in figure 20. This implementation differs from the figure 1 is that the engine assisted braking switching system is an electrical control device. It has an additional driver to drive the electrically switched engine braking (39) of the switching device. The electrical circuit installation is using the (PLC) program, as in manual automatic switching control (733), to electrically control brake bandage electrical motor (110), automatic control motor (728), and the electrically switched engine braking (39). When the driver select from the gear selection control key (729), according to the need to set at parking gear P, backward gear R, idle gear N, and the forward gear D. The PLC will accordingly operate the command motor (728), brake bandage electrical motor (110), electrically switched engine braking (39). At the D gear, the engine output sensor-detector (730) near the engine output shaft will detect, when the rotating speed is 10% greater than the idle speed, and start brake bandage electrical motor (110) to produce output power. Under the downhill or rapidly deceleration, the speed sensor-detector (731) installed near output shaft (68) or output shaft (83) will detect that the rotating speed is greater than the engine rotating speed that detected by the engine output sensor-detector (730). It will start the electrically switched engine braking (39) to let engine brake switch fork (32) cut into parking gear (35). And it produces the effect of engine assisted braking.

When the gas pedal is stepping on, the automatic control motor (728), according to the rotating speed that detected by the engine output sensor-detector (730) and the preset switching rotating speeds to pass to the worm gear locating sensor (732) near worm gear plate (719), to monitor control and automatic gear switch. This device includes a manual automatic switching control device (733) ( PLC ), engine rotating speed detecting signal sensor (730), auto speed detecting signal sensor (731), start satellite gear brake bandage electrical motor (110), power transmitting and electrical switched engine braking (39), the gear element key (729) of each gear, such as P,R,N,D,1,2,3,4,5... 32 gear element. Adopting the system automatic control microprocessor( PLC )to control. Since the electronic control system is controlled through the execution of program to control various operations. It is highly reliable, and trustable.

There is another kind of manual automatic adjuster device, it is through the sensor automatic adjuster and/or the key (729) to adjust. All of these mentioned are realized through some electrical circuit structure. The configurations are shown in figures 12, 19. These electronic structures all within current existed technology, and will not describe here.

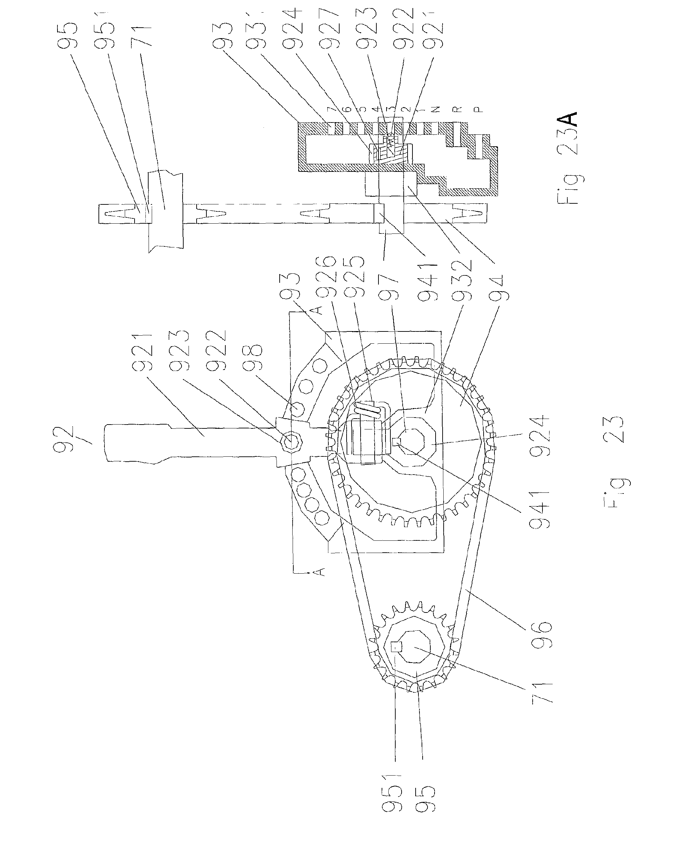

The pure manual control speed switching control shaft (71) rotating device is to eliminate driving motor (728) and replace it with a manual operated rotating speed switching control shaft (71) device. The structures are shown in figures 22, 23, 23A.

Another embodiment of the governor is a pure hand shift governor, the structure is as follows:

Using automatic governor as the base structure, which is described in figure 1, using start system as the traditional clutch to replace starter satellite gear device, using chain plate, roller chain to replace the worm gear plate (719), worm gear shaft ( 720 ) installations in speed switching control shaft (71). Manually shift the gear shift driving chain plate to make it turn. Then uses the manual shift stick, which making the speed switching control shaft (71) turns, to replace the automatic shift, which are driven by electrical motor or electronic automatic control device.

As shown in figure 22, uses the case which includes an automatic switching device. Eliminate the satellite gear device and the brake bandage electrical motor. The start system (1) is a clutch assembly (9), which the active parts are clutch active shaft connected to the power source, and the passive part is a clutch axel (91) installed on the output shaft (58). The engine power flows into the clutch assembly (9), and passes through clutch axel (91) to transmit into the governor. The power reaches the cylinder on clutch axel (91) ( this cylinder replaces solar gear (11) and put on output shaft (58)). The input active gear (31) installs on the cylinder and in between installs a drive ring (32A). In between drive ring (32A) and input active gear (31) set an one-way bearing (33A), in between drive ring (32A) and parking gear (35) there is another one-way bearing (34A).

When engine under acceleration, the rotating speed of drive ring (32A) is faster than that of input active gear (31), so, the power in drive ring (32A) passes through the one-way bearing (33A) to lead input active gear (31) and input passive gear (41) to move. This will transmit the engine power to input shaft (43). The rest of speed switching process will the same as the figure 1 implementation.

When engine is not under acceleration, the rotating speed of drive ring (32A) is slower than that of output shaft (58) or parking gear (35). So the reverse force of the inertia is passing from output shaft (58) and the cylinder of parking gear (35), through an one-way bearing (34A) transmit to drive ring (32A). Passing through the clutch axel (91) and clutch assembly (9) arrives the engine to produce an engine braking.

In the control process, this implementation installs a small chain plate (95) on speed switching control shaft (71) and using a roller chain (96) to connect it to the big chain plate (94) of gear box. Manually pushes hand shift stick (921) to switch speed.

The manual shift parts includes: hand shift stick assembly (92), gear box (93), big chain plate (94), small chain plate (95), and roller chain (96).

The hand shift stick assembly (92) includes hand shift stick (921), hand shift stick pivot (924), pin (925), heavy duty spring (926), steel ball (922), and steel ball spring (923).

The hand shift stick (921) is a flat stick, top of it is the handle, and in the bottom is a fork. The center of the fork has a pin hole. The upper part of the hand shift stick pivot (924) is rectangular. On the side has a pin hole, on the bottom is a flat disk shape, at the center of the disk perpendicularly put a shaft hole for the hand shift stick shaft (97). The hand shift stick assembly (92) and hand shift stick pivot (924) can be connected through applying the pin (925) in curvature. The protruded end of the pin (925) hooks to the heavy duty spring (926), and both ends strongly press on hand shift stick (921) and hand shift stick pivot (924) to make both bent backward. On the rear side of hand shift stick (921) and at the same height as the shift-hole (931) of gear box (93) put a steel ball (922), The steel ball spring (923) stop the protruded surface and stopping the ball from loose.

The gear box (93) is a rectangular shaped box, at near bottom centrally install hand shift stick seating (932), on the middle of top part of the right wall has semicircle protrusion, several shift holes are distributed around the circle which centered in the hand shift stick seating (932). Among them the shift hole for the backward gear R, comparing with that of idle gear N and other gears shift holes is one step leftward, the parking gear shift hole is one step further left.

Place hand shift stick assembly (92) inside gear box (93), put hand shift stick axel (97) through hand shift stick seating (932), latch hand shift stick pivot (924), and use hand shift stick pivot key (927) to fasten tightly. Outside of the box, put big chain plate (94) on one end of hand shift stick axel (97). Use big chain plate key (941) to fasten tightly. This makes shifting hand shift stick (921) and big chain plate (94) synchronize.

On speed switching control shaft (71), at the worm gear plate (719) position, install small chain plate (95), using small chain plate key (951) fasten tightly. To connect small chain plate (95) and big chain plate (94) using roller chain (96). This makes speed switching control shaft (71) and hand shift stick (921) synchronize and the manual hand shift stick can precisely control synchronization of speed switching control shaft (71).

Furthermore, the traditional tube steel cable linkage will also apply to this governor structure.

Shown in this implementation of the pure manual control speed switching control shaft (71) rotating device is produced from the clutch of currently exited manual governor. It is only used in the starting that required stepping on and release to start the car, during driving gear shift not require to step/release clutch. Following is the method of operation: Driver to step on clutch pedal and shift the hand shift stick (734) from N to 1, slowly release clutch, and simultaneous, step on the gas pedal to provide gas. After 1st gear, the driver only needs to provide more gas and shift the gear without the need to stepping on the clutch. The best of it is this implementation has 4 gear sets which can have 8 speed combinations.

For safety reason, it provides a push button (738), that the shift from N to R requires pushing this button in order to operate hand shift stick (734) (in order to drive under R, driver needs to step on then release the clutch, the R shift are operated under 2nd or 3rd gears). Push button is needed when the shift from N to R, or R to N. Similarly the shift from R to P or P to R needs to push button (738) before gear shift. Another caution is it requires the complete stop of the car before shift to P. See more details in the structure illustrations in figure 23.

To summarize this invention of the structure of the power governor as described previously, it is the usage of satellite gear sets combined with brake bandage to let input power to produce functions of clutch attach/detach, engine assisted braking through the engine brake ratchet sleeve (34) or one-way bearing (33A), (34A) to push/pull for gears meshing to perform forward, idle and engine assisted braking. The power transmitted can go through the spring-like device in the gear sets to push/release to produce the clutch function. In addition, using the various combinations of the arrangement of the one-way bearings installed on speed switching system (3) and neighboring output gears, it can achieve various gear shifting function.

The bevel gear set through the ratchet gears in both sides of output sleeve (65) to push pull of the forks producing gears meshing or detaching to produce forward, idle, and backward functions.

The use of the intensive electrical control system, based on the above mentioned various sensors located at critical locations to provide data related to road conditions, car operating conditions and combined with the data of the available power source , can provide the optimum settings at various car operating conditions. It also can apply to requirements of various car types, various power sources (engines) rotating directions, positive, reverse (clockwise, counter clockwise), rear drive, front drive, four wheels drive, or it can even apply to both manual or automatic power governor. The current technologies, the governors, always has a gear set for each speed, and thus the number of gears sets required is in proportion to the speeds available for switching. In this invention, the governor, the available number of speed is in the power of the number of gear sets (thus the number of available speeds is always larger than the number of gear sets). The much better governor characteristics provided by this invention, compares with the traditional technologies, provides useful and progressive industrial applications, and suitable for requirement for patents.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A multi-section improved power governor transmission comprising a start system (1), a speed switching system (3), a gear selection system (4), and a speed switching control system (5),
the start system (1) being placed on an output shaft (58) and comprising:active parts (16) connected to a power transmitting device; and passive parts (11) connected to and transmitting power to the speed switching system (3) and transmitting power, wherein the active parts (16) and the passive parts (11) are connected through a transmitting device;
the speed switching system (3) comprising:active parts (31) inputting power; and passive parts (56) outputting power and transmitting at various speed, wherein the active parts (31) and the passive parts (56) are connected through a speed switching gear set, and a speed switch adjusting device is located on the speed switching gear set;
the gear selection system (4) comprising active parts (61), passive parts (63), and a gear shift part (65), wherein the active parts (61) are connected to the passive parts (56) of the speed switching system (3), the passive parts (63) are installed on an output shaft (68, 83), and the gear shift part (65) is connected to the active parts (61), the passive parts (63), or none of the active parts and the passive parts to be solidly attached to the output shaft (68,83) so as to transmit power and rotate speed that correspond to forward, backward, or idle to front wheels, rear wheels, or four wheels;
the speed switching control system (5) comprising:control driving devices including a driving motor (728) and/or a manual driving device; and, control devices related to the speed switch adjusting device of the speed switching system (3) and related to the gear shift part (65) of the gear selection system (4), wherein the control driving device is connected to the control devices through the transmitting device,
wherein the control devices relating to the speed switch adjusting device of the speed switching system (3) further include control active parts (724) and control passive parts (726), the control passive parts (726) relating to the gear sets in the speed switching system (3), and the control active parts (724) being connected with the control passive parts, through the transmitting device,
wherein the control devices relating to the gear shift part (65) in the gear selection system (4) further include control active parts (717) and control passive parts (710,711), the control passive parts (710,711) being related to the gear shift part (65), the active parts (717) and the control passive parts being connected through the transmitting device,
the control active parts (724,711) of the two control devices are located on a speed switching control shaft (71), and the rotation of the speed switching control shaft (71) facilitates the gear shift and speed switching,
the multi-section improved power governor transmission further comprising:
a parking gear (35) solidly installed on the output shaft (58);
an engine assisted brake switching system (2) which is a switching device and is installed on the passive parts (11, 91) of the start system (1), wherein one end of the engine assisted brake switching system connects the active parts (31) of the speed switching system (3) to input power, or the other end of the engine assisted brake switching system connects the parking gear (35), wherein
when the engine assisted brake switching system connects the active parts (31) of the speed switching system (3) to input power, the engine assisted brake switching system transmits power from the start system (1) to the speed switching system (3), and this is in an engine power output state;
when the engine assisted brake switching system connects the parking gear (35) on the output shaft (58), the engine assisted brake switching system is in an engine assisted breaking state.

2. The multi-section improved power governor transmission as claimed in claim 1, wherein the start system (1) is a satellite gear set buffering device including a solar gear (11), a satellite gear (13), a ring gear, and two satellite gear frames located on both sides of the solar gear (11), one of the satellite gear frames (16) serving as active parts and the solar gear (11) serving as a passive part being adjacently installed on the output shaft (58), and the other satellite gear frame (17) is installed on a solar gear (11) cylinder at a side of the solar gear (11), wherein the active parts (31) of the speed switching system (3) are set between the other satellite gear frame (17) and the solar gear (11) cylinder installs, a satellite gear axel (14) is solidly installed between the two satellite gear frames (16,17), the satellite gear (13) is installed on the satellite gear axel meshed with the solar gear (11), and a meshed ring gear (18) is installed on the outside of the satellite gear (13),
the multi-section improved power governor transmission further comprising a device commanding the ring gear (18) and the solar gear (11) to stay still or to rotate, said device being a brake bandage driving device including a brake bandage electrical motor (110) and a brake bandage mandrel (19), a transmitting device which is installed between the brake bandage electrical motor (110) and the brake bandage mandrel (19), a brake bandage (15) with an end solidly attached to a main machine shell frame and another end of the brake bandage connecting the brake bandage mandrel, wherein when the brake bandage electrical motor (110) starts, the brake bandage mandrel (19) is driven to move, such that the brake bandage (15) tightly embraces or loosens the ring gear (18), or
the start system (1) being a clutch (9), wherein an active part of the clutch is a clutch active axel connected to the power source, and a passive part of the clutch is a clutch passive axel (91) set up on the output shaft (58).

3. The multi-section improved power governor transmission as claimed in claim 1 or 2, wherein the engine assisted brake switching system (2) includes an engine brake drive ring (32A) and two counter directed one-way bearings (33A, 34A) to form the switching device, the drive ring (32A) is solidly installed on the passive parts (11 or 91) of the start system (1), and a one-way bearing (33A) is installed between the drive ring (32A) and the active parts (31) of the speed switching system (3), wherein when an engine transmitted rotating speed is high and a rotating speed of the drive ring (32A) is greater than that of the active parts (31), the power is transmitted from the start system (1) to the speed switching system (3), or otherwise engine is idled and no power is transmitted, another one-way bearing (34A) being installed between the drive ring (32A) and the parking gear (35), wherein when a car drives downhill, the rotating speed of the engine is low, the rotating speed of the rear output shaft (68) is high, such that the rotating speed of the parking gear (35) is greater than that of the drive ring (32A), and the power is transmitted from the parking gear to the drive ring (32A) further to the start system (1) to produce engine assisted breaking, or otherwise the engine is idled and no power is transmitted, or
the engine assisted brake switching system alternatively being an electronic control switching device and including: a ratchet gear sleeve (34) and a driving device, the ratchet gear sleeve (34) sliding to attach to the passive part (11 or 91) of the start system (1), the ratchet gear sleeve (34) being placed between the active parts (31) of the speed switching system (3) and the parking gear (35), ratchet gears being installed at two sides of the ratchet gear sleeve (34), meshed ratchet gears being installed on one of the two sides of the ratchet gear sleeve (34), wherein the one of the two sides is near the active parts (31) and the parking gear (35); the driving device including an engine braking switching fork (32), an end of the engine braking switching fork being placed on a circular ring groove outside an outer circumference surface of the ratchet gear sleeve (34), another end of the engine braking switching fork being attached to a fork shaft (33); and an engine brake switching motor (39), a transmitting device being installed between the engine brake switching motor (39) and the engine brake switching fork (32), or
the engine assisted brake switching system alternatively being an acceleration pedal control switching device and including: a ratchet gear sleeve (34) and a driving device , the ratchet gear sleeve (34) sliding to attach onto the passive parts (11 or 91) of the start system (1) and being placed between the active parts (31) of the speed switching system (3) and the parking gear (35), wherein ratchet gear are installed on both sides of the ratchet gear sleeve (34), and the active parts (31) of the speed switching system (3) and the parking gear (35) on the side of the ratchet gear sleeve (34) are set up with meshed ratchet gears; a driving device including: an engine braking switching fork (32), an end of the engine braking switching fork being placed on a circular ring groove outside an outer circumference surface of the ratchet gear sleeve (34), another end of the engine braking switching fork being attached to a fork shaft (33); and an engine brake switching cable (315), a push handle (312) being set up on a top end of the engine braking switching fork (32), one end of the engine braking switching fork being attached to the engine brake switching cable (315), the other end of the engine braking switching fork connecting a spring (316) attached to the main machine shell, the engine brake switching cable connecting an acceleration pedal, wherein engine braking is produced when not stepping on the acceleration pedal.

4. The multi-section improved power governor transmission as claimed in claim 1, 2, or 3, wherein the speed switching gear set of the speed switching system (3) includes meshed input gear sets and output gear sets, each of which being respectively installed on the input shaft (43) and the output shaft (58), gears in the input gear sets and the output gear sets are one on one meshed, each meshed input gear and output gear is a speed switching gear set row, a meshed input active gear (31) and input passive gear (41) on the input shaft (43) is an active part, on the input shaft a solidly based gear is set up as a first row input gear of the speed switching gear set and meshed with a first output gear (51), the other input gears (46, 47, 48, 49, 410...... ) are all installed on the input shaft (43), and the output gears (52, 53, 54, 55, 56..... ) are on the output shaft (58), wherein the input gear and the corresponding output gear are one on one meshed to form several rows of speed switching gear sets., and the output gear in the last row of the speed switching gear sets is the passive part (56) of the speed switching system (3), wherein the speed switch adjusting device includes: a device which either connects neighboring input gears on the input shaft (43) to form a synchronized body that turns at the same speed or detaches to let idle, wherein the device is a spring-like device, the output gears of the output gear set are installed on the output shaft (58), an one-way bearing is installed and connected between two neighboring gears, and the output gear with a relatively high speed brings up the rotating speed of the output gear with a relative low speed, wherein at the lower gear the rotating speed can be synchronized, and at the higher speed, the high speed gear rotates, and the low gear is idled.

5. The multi-section improved power governor transmission as claimed in claim 4, wherein in the input gears of the spring-like device:
an end of the spring-like device (45) is solidly attached onto the surface of the end of each individual input gear (46, 47, 48, 49, 410 , ......) from the second row to the last row of the speed switching gear set, and the other end of the spring-like device forms an empty cavity, a cylinder of the previous input gear being placed in the empty cavity, a joint being in the empty cavity, the neighboring input gear on the corresponding side having a similar joint, a driving device being located between two joints on the input shaft (43) and moving the input shaft (43) to apply pressure on the spring-like device to make it detached from the neighboring input gear joint, wherein when the pressure is released, two joints are attached again, and the driving device and the control device of the speed switching control system (5) are connected.

6. The multi-section improved power governor transmission as claimed in claim 1, 2, or 3, wherein the gear selection system (4) is a bevel gear speed switching device, the active parts refer to an active bevel gear (61) and the passive parts refer to a passive bevel gear (63), in between there is a reversing intermediate bevel gear (62) solidly fixed on the main machine shell and meshed with the active and passive bevel gears, a bearing is installed between the passive bevel gear (63) and the output shaft (68 or 83), the reversing intermediate bevel gear is an output sleeve (65), joints are on both sides corresponding to the active and passive bevel gears, and the output sleeve (65) connects a fork elevator , and connects the control device of the speed switching control system (5).

7. The multi-section improved power governor transmission as claimed in claim 5, wherein the control device for the speed switching system (3) in the speed switching control system (5) is a simple pull-push device includes: a control active part which is a top bead locating active gear disk (724); and a control passive part which is a top bead locating passive gear disk (726); the driving device correspondingly including a speed switching control panel (723) and a speed switching bracket (73), wherein n-1 speed switching bracket (72,73,74,75,76,.....) and speed switching control panel (723) are disposed on the speed switching control shaft and corresponds to n rows of the speed switching gear set in the speed switching system (3), n-1 simple pull-push devices are correspondingly disposed, the speed switching control panel (723) is installed on the input shaft (43) through the bearing attached to the end of the spring-like device (45), the speed switching bracket (73) has a plate shape and has two holes (73A,73C) thereon, through one hole (73C) the speed switching bracket (73) is attached onto the cylinder of the input gear (46) which is neighboring with the spring-like device (45), and through another hole (73A) the other end of the speed switching bracket (73) is attached to the speed switching control shaft (71) which makes the speed switching bracket (73) stay still on the input shaft (43), wherein the top bead locating active gear disk (724) serving as the active part is solidly fixed on the speed switching control shaft (71), and the top bead locating passive gear disk (726) serving as the passive part is installed on the cylinder of the input gear (46) which is located between the speed switching control panel (723) and the speed switching bracket (73) and meshes with the top bead locating active gear (31) disk, wherein top bead holes are on the top bead locating passive gear disk, and top beads (725) corresponding to the speed switching control panel (723) are in the holes, wherein circular arch shape top bead push-pull groove tracks (73B) corresponding to the top bead holes are on the speed switching bracket (73), when the speed switching control shaft (71) turns, the top beads (725) locating in the passive gear disk are moved to turn, and the top beads (725) drop in the grooves in the speed switching bracket (73), wherein the spring-like device is loosen to join the neighboring input gear, or, if the top beads (725) are not in the groove track (73B) of the speed switching bracket (73), the speed switching control panel (723) is moved to press the spring-like device to be detached from the neighboring input gear, wherein the speed switching bracket (73) and the corresponding circular arch shaped top bead push-pull groove track (73B) are on the top bead locating passive gear disk, and the top bead container holes are distributed on a circle to produce various sets of combinations, wherein the number of sets corresponds to the number of rows in the output gears and is the required number of speed switches.

8. The multi-section improved power governor transmission as claimed in claim 6, wherein the fork elevator includes:
a control active part which is a front folk (710) and a rear folk (711);
a control passive part which is forward or backward control cam disks, wherein the two forks are set up on both right and left sides of the output sleeve, and the contacts of the output sleeve (65) are on a relative slanted planes;
a balance board, wherein the center of the board is rotatably fixed on a balance board shaft (713) on the main machine shell, the balance board positioned on both sides of the balance board shaft (713) has a long joint hole jointing the middle of the front fork (710) and the end of the rear fork (711) through the pin, the pin moves through the long hole, and the bottom of the front fork (710) is an enclosed frame;
a forward-backward control panel (717) fastened to the speed switching control shaft (71) through a key, a roller shaft of the control panel being set on the enclosed frame of the front fork (710), wherein a cam wheel device is formed on the roller shaft joining with the roller wheel and contacting with the forward-backward control panel (717), and the forward-backward control panel (717) rotates on the speed switching control shaft (71) to move to the front fork (710) upward or downward and to move the output sleeve (65) left or right to join with the active bevel gear or the passive bevel gear or just sit in the middle to correspond to the forward, backward, and idle gear.

9. The multi-section improved power governor transmission as claimed in claim 1, further comprising a parking lock device having a parking cam (77) fixed onto the speed switching control shaft (71) and a parking lock pole (78) turning to be attached on the main machine shell, wherein the parking lock pole has two extender linkages, one end of the linkages touches the parking cam (77), and the other end having a locking gear moves with the parking cam (77) to mesh the locking gear and the parking gear (35) and lock out the output shaft (58), or to be detached from the parking gear (35) to unlock from the output shaft (58).

10. The multi-section improved power governor transmission as claimed in claim 1, 2, or 3, further comprising an automatic control sensor device (730) located near the active parts (16) of the start system (1), sensors are installed on the main machine shell,
wherein a turn disk (719) is installed on the speed switching control shaft (71) of the speed switching control system (5), the sensors are distributed on the circumference of the turn disk, a sensor part corresponding thereto is installed at the corresponding locations on the main machine shell to form a sensor detector device (732) used in conjunction with the PLC preset values to determine the feedback to control the car driving, wherein the feedback is obtained from the gear shift rotating speed and the engine rotating speed which is determined by the driver and based on the PLC program, and the preset values automatically control the motor that leads to worm gear shaft rotation and worm gear plate (719) rotation and transmit to the speed switching control shaft (71) to achieve the automatic gear shift, wherein the sensors detect the rotating speed of the active parts of the start system (1) to compare it with the preset values in the PLC for starting or stopping the brake bandage electrical motor (110), and/or
the automatic control sensor device further comprising sensors (731) which act as the electronic control switching device in the engine assisted braking switching system (2) and are installed in the passive parts (56) of the speed switching system (3) and the neighboring main machine shell to coordinate with other sensors (730) to control the electronic control switching device to start or stop the engine, or
the automatic control sensor device, in a manual control device, further including a hand shift stick shaft (97) and a speed switching control shaft (71) connected by a transmitting device and a gear location elements box (93) on which a rotatable hand shift stick shaft (97) is installed, wherein a driving hand shift stick (921) is attached onto the hand shift stick shaft (97) to allow the driver through the shifting hand shift stick (921) to transmit the motion to the speed switching control shaft, wherein an elastic locating device is installed on the hand shift stick (921) to determine the corresponding operations in the speed switching control shaft (71) based on the locus of the hand shift stick movement, so as to achieve the manual gear shift.

11. The multi-section improved power governor transmission as claimed in claim 10, further comprising following sensors corresponding to the electronic control switching device in the engine assisted braking switching system:
an engine brake sensor (736); and
a transmission sensor (737), the sensors being located at the corresponding locations on the pedal and in a driver area and assisting driving motors in the electronic control switching device and the start system (1), wherein a permanent magnet as a part of the sensors is installed on the pedal (313), and another part of the sensors is installed in the driver area corresponding to the pedal located in following positions:
(w1) on the brake pedal corresponding to a full open gas valve;
(w2) on an acceleration stop or an acceleration start;
(w3) on the active parts location in the speed switching system (3) which allows the ratchet gear sleeve (34) to disjoin or rejoin; or
(w4) on the parking gear (35) location which allows the ratchet gear sleeve (34) to disjoin or rejoin,
wherein location sensing information is passed to PLC and further sent to connect or cutoff the motor to execute the switching between the engine and the brake.

12. The multi-section improved power governor transmission as claimed in claim 7, wherein six sets of circular arch shaped top bead pull-push groove tracks (73B) are on the speed switching bracket (73), and each set of the push-pull groove tracks is evenly distributed on a circle and has three groove tracks intersecting with each other at 120 degree, wherein three concentric circles are on the speed switching bracket (73), and within a set of groove tracks, each track is in separate concentric circles, wherein the lengths of the groove tracks in the same set are different to accommodate n=6 rows of speed switching gear sets and 32 or lower gears speed switching.
